# EUROPÄISCHE PATENTSCHRIFT

(11) **EP 0 765 918 B1**
(45) Veröffentlichungstag und Bekanntmachung des Hinweises auf die Patenterteilung: **28.07.1999**
(21) Anmeldenummer: 96114799.8
(22) Anmeldetag: 16.09.1996
(51) Int. Cl.: C09B 67/22, D06P 3/14, C09B 62/503

(54) **Färbepräparationen von faserreaktiven Farbstoffen**
Reactive dye preparations
Préparations tinctoriales de colorants réactifs

(30) Priorität: 28.09.1995 DE 19536222
(43) Veröffentlichungstag der Anmeldung: 02.04.1997
(73) Patentinhaber: DyStar Textilfarben GmbH & Co. Deutschland KG, 60318 Frankfurt am Main (DE)
(72) Erfinder: Russ, Werner Hubert, Dr., 65439 Flörsheim (DE); Elliott, Mike, Greetland Halifax HX4 8DY (GB)

(56) Entgegenhaltungen:
- DE-A- 2 047 832
- US-A- 4 762 524

## Beschreibung

Die Erfindung liegt auf dem technischen Gebiet der faserreaktiven Farbstoffe.

Das Färben von Wolle mit sulfonsäuregruppenhaltigen Farbstoffen mit einer faserreaktiven β-Sulfatoethylsulfonyl-Gruppe ist bekannt. So erhält man Färbungen mit zufriedenstellender Naßechtheit und Brillanz, wenn man Wolle in der Färbeflotte bei Kochtemperatur während mindestens 30 Minuten und unter Einhaltung eines pH-Wertes von 6 färbt. Dieser pH-Wert von 6 ist jedoch während der Färbedauer schwierig zu halten; bei höherem pH-Wert wird die Struktur der Wolle geschädigt und bei einem niedrigeren pH-Wert als 6 die Naßechtheit der Färbungen deutlich vermindert. Geht man jedoch nicht von den β-Sulfatoethylsulfonyl-Farbstoffen, sondern von deren Vinylsulfonyl-Derivat aus, die durch kurze Einwirkung von Trinatriumphosphat bei 80°C auf die wäßrige Lösung des β-Sulfatoethylsulfonyl-Farbstoffes und anschließende Neutralisation der Lösung und Einstellung auf einen pH-Wert von 5 mittels Essigsäure erhalten werden können, so lassen sich gemäß den Angaben in der U.S. Patentschrift Nr. 3 802 837 auch hier bei einem pH-Wert von 5 zufriedenstellend naßechte Färbungen auf Wolle erhalten. Diese Methode hat allerdings den erheblichen Nachteil, daß viele Farbstoffe aus dem alkalischen wäßrigen Medium ausfallen, wenn die wasserlösliche β-Sulfatoethylsulfonyl-Gruppe in die Vinylsulfonylgruppe übergeführt wird. Deren Löslichkeit läßt sich nach der erwähnten U.S.-Patentschrift 3 802 837 deutlich verbessern, wenn die Überführung der β-Sulfatoethylsulfonyl-Farbstoffe in die Vinylsulfonyl-Farbstoffe in Gegenwart eines 1,5-fach bis 4-fach molaren Überschusses, bezogen auf die β-Sulfatoethylsulfonyl-Gruppe, an einem sulfo- oder carboxygruppenhaltigen sekundären aliphatischen Amin erfolgt.

Nach dieser bekannten Verfahrensweise ist jedoch beim Färben von synthetischen Polyamid-Fasermaterialien die Erschöpfung des Färbebades im Ausziehverfahren nur gering, und eine ausreichende Färbebaderschöpfung gelingt nur nach längeren Färbezeiten bei Kochtemperatur und die Fixierung der Farbstoffe erhöht sich erst gegen Ende dieses längeren Färbeprozesses. Sowohl im Färbebad als auch auf der Faser verbleiben bei der üblichen Färbeweise größere Mengen an unfixiertem Farbstoff mit dem Ergebnis, daß die Färbungen farbschwach, ungleichmäßig und von nicht zufriedenstellender Echtheit sind.

Um diesem Nachteil zu entgehen, hat man versucht (s. U.S.-Patentschrift Nr. 4 762 524), synthetische Polyamidfasermaterialien mit Farbstoffen mit den faserreaktiven Gruppen des Vinylsulfonyltyps im schwach sauren Färbebad bei einem pH-Wert zwischen 3 und 4 zu färben, indem man Farbstoffe mit einer β-Sulfatoethylsulfonyl-Gruppe zusammen mit einem sulfo- oder carboxygruppenhaltigen sekundären Alkylamin in einem molaren Anteil zwischen 50 und 100 %, bezogen auf den β-Sulfatoethylsulfonyl-Farbstoff, einsetzt und diese zunächst in wäßriger Lösung mit einem alkalisch wirkenden Mittel, wie Trinatriumphosphat, bei einem pH-Wert von etwa 9 und einer Temperatur von etwa 90°C behandelt und hierbei den β-Sulfatoethylsulfonyl-Farbstoff teilweise in den β-(Alkylamino)-ethylsulfonyl-Farbstoff überführt. Nach Einstellen des Ansatzes auf einen pH-Wert von 3 bis 4 erfolgt die Färbung des synthetischen Polyamidfasermaterials bei Kochtemperatur.
Mit dieser Verfahrensweise werden jedoch ebenfalls Färbungen mit unbefriedigender Egalität und deutlichen Streifigkeiten und zudem nicht ausreichender Durchfärbbarkeit des Fasermaterials erhalten, wenn man moderne Fasermaterialien mit Fasern, die aus äußerst feinen Fäden aufgebaut sind, einsetzt. Deutliche Mängel ergeben sich hierbei auch bei kontinuierlichen Färbeweisen, bei denen diese bekannten Präparationen Färbungen unterschiedlicher Farbtiefe zu Anfang und zum Ende des Färbeprozesses liefern.

Es bestand somit weiterhin ein Bedarf, das Färben von synthetischen Polyamidfasermaterialien zu verbessern.

Mit der vorliegenden Erfindung wurden nunmehr neue Präparationen gefunden, mit denen synthetische Polyamidfasern in hoher Brillanz, Egalität und unter Vermeidung des Barré-Effektes (Melliand Textilber. 70, 360-364 (1989)) gefärbt werden können. Diese Färbepräparationen (im nachfolgenden "Präparationen (A)" genannt) enthalten einen Farbstoff der nachstehend angegebenen und definierten allgemeinen Formel (1) und einen Farbstoff der nachstehend angegebenen und definierten allgemeinen Formel (2) mit zu (1) identischem Farbstoffrest F oder eine Mischung verschiedener Farbstoffe der allgemeinen Formel (1), wie von zwei oder drei solcher Farbstoffe, und von verschiedenen Farbstoffen der allgemeinen Formel (2), wie von zwei oder drei solcher Farbstoffe, mit zu (1) identischen Farbstoffresten F, wobei der Farbstoff oder die Farbstoffe der allgemeinen Formel (1) und der Farbstoff oder die Farbstoffe der allgemeinen Formel (2) in der Präparation in bezug auf die Gruppen -(SO₂-CH=CH₂)ₙ und -[SO₂CH₂-CH₂-N(R)-V-X]ₙ zueinander im moläquivalenten Verhältnis von 90:10 % bis 60:40 %, bevorzugt von 80:20 % bis 65:35 %, vorliegen.

Die vorliegende Erfindung betrifft weiterhin Farbstoffpräparationen (im nachfolgenden "Präprationen (B)" genannt), die einen oder mehrere, wie zwei oder drei, Farbstoffe der nachstehend angegebenen und definierten allgemeinen Formel (1A) und/oder einen oder mehrere, wie zwei oder drei, Farbstoffe der Formel (1) und eine oder mehrere, wie zwei oder drei, Verbindungen der nachstehend angegebenen und definierten allgemeinen Formel (3) enthalten, wobei der Farbstoff oder die Farbstoffe der allgemeinen Formel (1A) und (1) in bezug auf die β-Sulfatoethylsulfonyl- und Vinylsulfonyl-Gruppen zu der oder den Verbindungen der allgemeinen Formel (3) in einem moläquivalenten Verhältnis von 100:10 % bis 100:40 %, bevorzugt von 100:20 % bis 100:35 %, vorliegen.

Die erfindungsgemäßen Präparationen (B) enthalten bevorzugt nur eine Aminoverbindung entsprechend der allgemeinen Formel (3), und bevorzugt enthalten die Präparationen (B) als Farbstoffe einen oder mehrere Farbstoffe der allgemeinen Formel (1A).

F - (SO₂-CH=CH₂)ₙ (1)

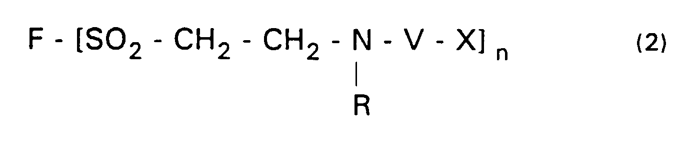

F - (SO₂-CH₂-CH₂-OSO₃M)ₙ (1A)

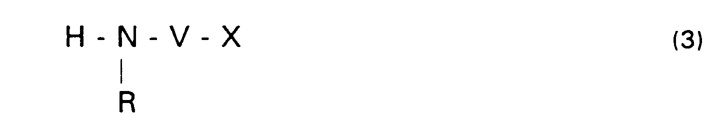

In den obengenannten Formeln bedeuten:
- F: ist der Rest eines 1 oder 2 wasserlöslich-machende Gruppen, wie Sulfato-, Sulfo- und/oder Carboxygruppen, besitzenden, bevorzugt 1 oder 2 Sulfogruppen, insbesondere bevorzugt 1 Sulfogruppe besitzenden, Mono-, Dis- oder Polyazofarbstoffes, wie Trisazofarbstoffes, oder Schwermetallkomplex-Mono-, -Dis- oder -Trisazofarbstoffes oder Anthrachinon-, Azomethin-, Phenazin-, Stilben-, Triphenylmethan-, Xanthen-, Thioxanthen-, Nitroaryl-, Naphthochinon-, Perylentetracarbimid-, Formazan-, Kupferformazan-, Phthalocyanin-, Kupferphthalocyanin-, Nickelphthalocyanin- oder Kobaltphthalocyanin-Farbstoffes oder Triphendioxazin-Farbstoffes;
- n: ist die Zahl 1 oder 2, bevorzugt 1;
- M: ist Wasserstoff oder ein Alkalimetall, wie Natrium, Kalium oder Lithium;
- R: ist Wasserstoff oder Alkyl von 1 bis 6 C-Atomen, bevorzugt von 1 bis 4 C-Atomen, das durch 1 oder 2 Heterogruppen, wie Gruppen der Formeln -O- und -NH- , unterbrochen und durch einen Substituenten aus der Gruppe Sulfo, Carboxy, Hydroxy, Sulfato, Phosphato und Alkanoylamino von 2 bis 5 C-Atomen substituiert sein kann, bevorzugt Wasserstoff und insbesondere Methyl, Ethyl oder β-Hydroxyethyl;
- V: ist eine kovalente Bindung oder Alkylen von 1 bis 4 C-Atomen, wie Methylen oder Ethylen, oder eine Gruppe der Formel -CO-NH-CH₂-CH₂- ;
- X: ist eine wasserlöslich-machende Gruppe, wie Carboxy, Sulfo, Sulfato, Phosphato oder Hydroxy.

Gruppen der allgemeinen Formel -N(R)-V-X in Farbstoffen der allgemeinen Formel (2) sind beispielsweise N-Methyl-N-(β-sulfoethyl)-amino, N,N-Di-(β-hydroxyethyl)-amino, N-Methyl-N-(carboxymethyl)-amino, N-Methyl-N-(γ-carboxypropyl)-amino, N-Methyl-N-(β-carboxyethyl)-amino, N-Methyl-N-(ω-carboxypentyl)-amino und N-Ethyl-N-(γ-carboxypropyl)-amino.

Von den 1 oder 2 Sulfato-, Sulfo- und/oder Carboxygruppen enthaltenden Farbstoffresten F ist der Rest F bevorzugt der Rest eines Mono- oder Disazofarbstoffes oder eines Schwermetallkomplex-Azofarbstoffes, wie eines 1:2-Chromkomplex-, 1:2-Kobaltkomplex- und insbesondere eines o,o'-1:1-Kupferkomplex-Monoazo- oder -Disazofarbstoffes, oder eines Anthrachinon- oder Kupferformazan- oder Nickel- oder Kupferphthalocyaninfarbstoffes oder Triphendioxazinfarbstoffes.

Der Rest F kann die bei organischen Farbstoffen übliche Substituenten und Gruppen enthalten. Solche Substituenten und Gruppen sind beispielsweise: Alkylgruppen von 1 bis 4 C-Atomen, wie Methyl, Ethyl, Propyl, Isopropyl und Butyl, hiervon bevorzugt Ethyl und insbesondere Methyl; Alkoxygruppen von 1 bis 4 C-Atomen, wie Methoxy, Ethoxy, Propoxy, Isopropoxy und Butoxy, bevorzugt hiervon Ethoxy und insbesondere Methoxy; Alkanoylaminogruppen von 2 bis 5 C-Atomen, wie die Acetylamino- und Propionylaminogruppe; Benzoylaminogruppen, die durch Methyl, Ethyl, Methoxy, Ethoxy, Chlor und/oder die oben bereits erwähnten wasserlöslich-machenden Gruppen substituiert sein können; primäre und mono- oder disubstituierte Aminogruppen, wobei die Substituenten beispielsweise Alkylgruppen von 1 bis 4 C-Atomen und/oder Phenylgruppen sind, wie Monoalkylamino- und Dialkylaminogruppen mit 1 bis 4 C-Atomen im Alkylrest, Phenylamino- oder N-(C₁-C₄-Alkyl)-N-phenyl-amino-Gruppen, wobei die Alkylreste noch substituiert sein können, beispielsweise durch Phenyl und/oder die oben bereits erwähnten wasserlöslich-machenden Gruppen, wie Hydroxy, Sulfato, Sulfo und Carboxy, oder solche Gruppen enthaltende Substituenten, wie Sulfophenyl, und wobei die Phenylgruppen noch substituiert sein können, wie durch Chlor, Methyl, Methoxy und/oder die oben bereits erwähnten wasserlöslich-machenden Gruppen oder solche Gruppen enthaltende Substituenten, so beispielsweise Methylamino-, Ethylamino-, Propylamino-, Isopropylamino-, Butylamino-, N,N-Di-(β-hydroxyethyl)-amino-, N,N-Di-(β-sulfatoethyl)-amino-, Sulfobenzylamino-, N,N-Di-(sulfobenzyl)-amino- und Diethylaminogruppen sowie Phenylamino- und Sulfophenylaminogruppen; Alkoxycarbonylgruppen mit einem Alkylrest von 1 bis 4 C-Atomen, wie Methoxycarbonyl und Ethoxycarbonyl; Alkylsulfonylgruppen von 1 bis 4 C-Atomen, wie Methylsulfonyl und Ethylsulfonyl; Trifluormethyl-, Nitro- und Cyanogruppen; Halogenatome, wie Fluor, Chlor und Brom; Carbamoylgruppen, die durch Alkyl von 1 bis 4 C-Atomen mono- und disubstituiert sein können, wobei die Alkylreste wiederum substituiert sein können, beispielsweise durch Phenyl und/oder die oben bereits erwähnten wasserlöslich-machenden Gruppen, wie Hydroxy, Sulfato, Sulfo und Carboxy, oder solche Gruppen enthaltende Substituenten, wie Sulfophenyl, wie beispielsweise N-Methyl-carbamoyl und N-Ethyl-carbamoyl; Sulfamoylgruppen, die durch Alkylgruppen von 1 bis 4 C-Atomen mono- oder disubstituiert sein können, und N-Phenyl-N-alkyl-sulfamoylgruppen mit einer Alkylgruppe von 1 bis 4 C-Atomen, wobei diese Alkylgruppen wiederum durch Phenyl und/oder die oben bereits erwähnten wasserlöslich-machenden Gruppen, wie Hydroxy, Sulfato, Sulfo und Carboxy, oder solche Gruppen enthaltende Substituenten, Sulfophenyl, substituiert sein können, wie beispielsweise N-Methyl-sulfamoyl, N-Ethyl-sulfamoyl, N-Propyl-sulfamoyl, N-lsopropyl-sulfamoyl, N-Butyl-sulfamoyl, N-(β-Hydroxyethyl)-sulfamoyl und N,N-Di-(β-hydroxyethyl)-sulfamoyl; N-Phenylsulfamoyl-, Ureido-, Hydroxy- und Sulfomethylgruppen.

Die in den Farbstoffen der Formeln (1), (1A) und (2) befindlichen Vinylsulfonyl- und β-Sulfatoethylsulfonyl-Gruppen und Gruppen der allgemeinen Formel (3a) 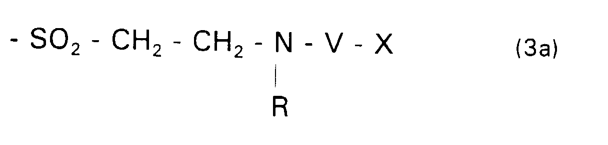 in welcher R, V und X die obengenannten Bedeutungen haben, können direkt an einen aromatischen Kern des Farbstoffchromophors oder an einen Substituenten des Farbstoffchromophors des Farbstoffrestes F gebunden sein.

Weitere Substituenten im Rest F oder im Rest F enthaltene Gruppen sind beispielsweise Gruppen der allgemeinen Formel (4) oder (5) 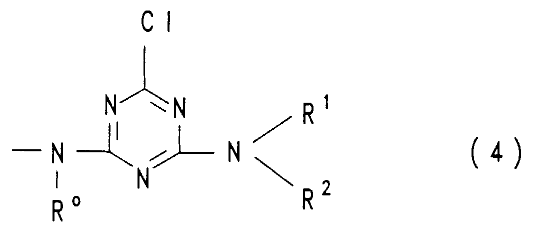 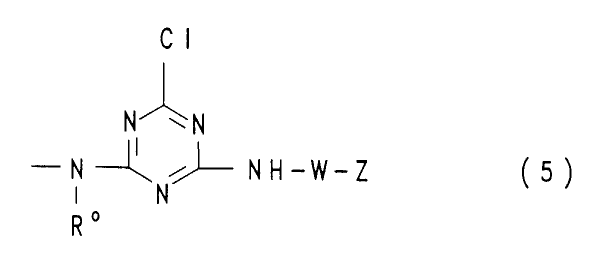 in welchen
- R^{o}: Wasserstoff oder Alkyl von 1 bis 4 C-Atomen, wie Methyl und Ethyl, ist,
- R¹: Wasserstoff oder Alkyl von 1 bis 4 C-Atomen, wie Ethyl und Methyl, ist, das durch Alkanoyl von 2 bis 5 C-Atomen und/oder die oben bereits erwähnten wasserlöslich-machenden Gruppen, wie Carboxy, Hydroxy, Sulfo, Sulfato und Phosphato, substituiert sein kann,
- R²: eine der Bedeutungen von R¹ hat oder Cycloalkyl von 5 bis 8 C-Atomen, wie Cyclohexyl, ist oder Phenyl ist, das durch 1 oder 2 Substituenten aus der Gruppe Alkyl von 1 bis 4 C-Atomen, wie Ethyl und Methyl, Alkoxy von 1 bis 4 C-Atomen, wie Ethoxy und Methoxy, Chlor und/oder die oben bereits erwähnten wasserlöslich-machenden Gruppen, wie Sulfo und Carboxy, substituiert sein kann, oder
die Gruppe -NR¹R² den Rest eines gesättigten Heterocyclus mit 5 bis 8 C-Atomen bedeutet, der noch 1 oder 2 weitere Heterogruppen, wie Gruppen der Formeln -O- und -NH- , enthalten kann, wie den N-Morpholino-, N-Piperidino- oder N-Piperazino-Rest,
- W: Phenylen oder Alkylen von 2 bis 4 C-Atomen, wie Ethylen und n-Propylen, ist oder Alkylen von 3 bis 8 C-Atomen, bevorzugt von 4 bis 6 C-Atomen, ist, das durch 1 oder 2 Heterogruppen, wie Gruppen der Formeln -O- und -NH-, unterbrochen sein kann, wie beispielsweise Ethylenoxy-ethylen oder Ethylenamino-ethylen, oder Alkylen-phenylen mit einem Alkylenrest von 1 bis 4 C-Atomen oder Phenylen-alkylen mit einem Alkylenrest von 1 bis 4 C-Atomen, wie Ethylen und Propylen, oder Phenylen-alkylen mit einem Alkylenrest von 3 bis 8 C-Atomen, bevorzugt von 4 bis 6 C-Atomen, der durch eine oder zwei Heterogruppen, wie Gruppen der Formeln -O- und -NH- , unterbrochen sein kann, oder (C₁-C₄)-Alkylenphenylen-(C₁-C₄)-alkylen ist, wobei die hier angegebenen Phenylenreste noch durch 1 oder 2 Substituenten aus der Gruppe Alkyl von 1 bis 4 C-Atomen, wie Ethyl und Methyl, und Alkoxy von 1 bis 4 C-Atomen, wie Ethoxy und Methoxy, und/oder die oben bereits erwähnten wasserlöslich-machenden Gruppen, wie Sulfo und Carboxy, substituiert sein können, und
- Z: die in den Formeln (1), (1A) und (2) angegebene Vinylsulfonyl- bzw. β-Sulfatoethylsulfonyl-Gruppe bzw. Gruppe der Formel (3a) ist.

In den oben angegebenen allgemeinen Formeln sowie in den nachfolgenden allgemeinen Formeln können die einzelnen Formelglieder, sowohl verschiedener als auch gleicher Bezeichnung innerhalb einer allgemeinen Formel, im Rahmen ihrer Bedeutung zueinander gleiche oder voneinander verschiedene Bedeutungen haben.

Die Gruppen "Sulfo", "Carboxy", "Phosphato" und "Sulfato" schließen sowohl deren Säureform als auch deren Salzform ein. Demgemäß bedeuten Sulfogruppen Gruppen entsprechend der allgemeinen Formel -SO₃M , Carboxygruppen Gruppen entsprechend der allgemeinen Formel -COOM, Phosphatogruppen Gruppen entsprechend der allgemeinen Formel -OPO₃M₂ und Sulfatogruppen Gruppen entsprechend der allgemeinen Formel -OSO₃M, in welchen M die obengenannte Bedeutung hat.

Bevorzugte Mono- und Disazofarbstoffe der allgemeinen Formel (1) sind beispielsweise solche der allgemeinen Formeln (6a), (6b) und (6c)

D¹ - N = N - (E - N = N)ᵥ - K² - Z (6a)

Z - D² - N = N - (E - N = N)ᵥ - K¹ (6b)

Z - D² - N = N - (E - N = N)ᵥ - K² - Z (6c)

und die davon abgeleiteten Schwermetallkomplex-Verbindungen, wie 1:1-Kupferkomplex-Verbindungen, wie bspw. Farbstoffe der allgemeinen Formeln (6d) und (6e) 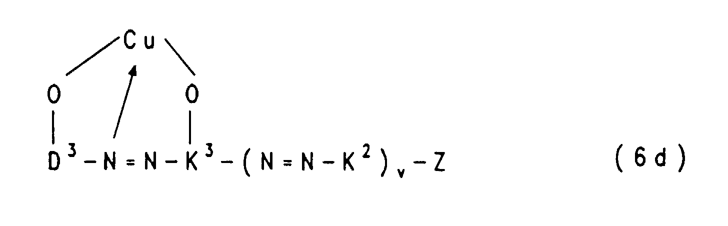 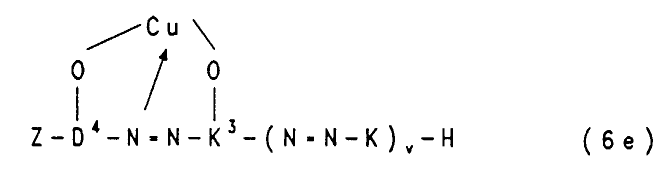 in welchen
D¹, D², D³, D⁴, E, K¹, K² und K³ wie nachfolgend definiert sind und
K den bivalenten Rest einer Kupplungskomponente bedeutet,
jedoch die Reste D¹, D², D³, D⁴, K¹, K², K³ und K in dem jeweiligen Farbstoff nicht mehr als 1 oder 2 der obengenannten wasserlöslich-machenden Sulfato-, Sulfo- und/oder Carboxygruppen, bevorzugt zusammen 1 oder 2 Sulfogruppen, insbesondere bevorzugt 1 Sulfogruppe, enthalten,
- v: die Zahl Null oder 1 ist und
- Z: Vinylsulfonyl, β-Sulfatoethylsulfonyl oder eine Gruppe der allgemeinen Formel (3a) bedeutet.

Bevorzugte Farbstoffe der allgemeinen Formel (1) sind weiterhin Disazofarbstoffe der allgemeinen Formel (6f) 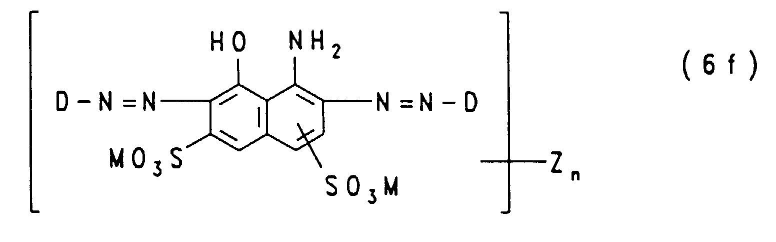 in welcher M, n und Z die obengenannten Bedeutungen haben und D jedes die Bedeutung von D¹ oder D² besitzt in Abhängigkeit davon, ob an D der Rest Z gebunden ist.

Reste D¹ und Z-D²- , die Bestandteil von aromatischen Aminen sind, welche die Funktion einer Diazokomponente besitzen können, sind solche der allgemeinen Formeln (7a) und (7b) 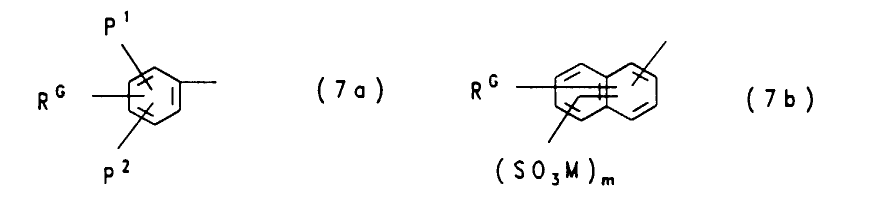 und Reste D³ und Z-D⁴- sind solche der allgemeinen Formeln (8a) und (8b) 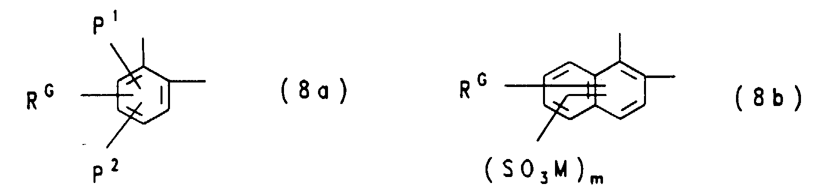 in welchen
- R^{G}: Wasserstoff, Sulfo, Carboxy oder eine Gruppe der Formel Y-SO₂-W^{o}- oder Y^{o}-SO₂-W^{o}- ist,
in welchen
Y Vinyl oder β-Sulfatoethyl ist,
Y^{o} eine Gruppe der allgemeinen Formel (3b) 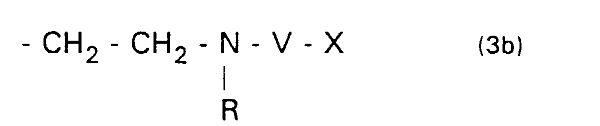 mit R, V und X der obigen Bedeutung ist und
W^{o} ist eine kovalente Bindung oder Alkylen von 1 bis 4 C-Atomen ist, wie Methylen, Ethylen und n-Propylen, oder Alkylen von 3 bis 8 C-Atomen, bevorzugt von 4 bis 6 C-Atomen, ist, das durch 1 oder 2 Heterogruppen der Formeln -O- und/oder -NH- unterbrochen ist, oder Phenylen-methylen oder Phenylen-ethylen ist,
- P¹: Wasserstoff, Sulfo, Methyl, Ethyl, Methoxy, Ethoxy, Alkanoyl von 2 bis 5 C-Atomen, wie Acetyl und Propionyl, Cyano, Alkoxycarbonyl von 2 bis 5 C-Atomen, wie Methoxycarbonyl und Ethoxycarbonyl, Carbamoyl, N-(C₁-C₄-Alkyl)-carbamoyl, Fluor, Chlor, Brom oder Trifluormethyl ist,
- P²: Wasserstoff, Methyl, Ethyl, Methoxy, Ethoxy, Cyano, Nitro, Chlor, Alkanoylamino von 2 bis 5 C-Atomen, wie Acetylamino, Alkoxycarbonyl von 2 bis 5 C-Atomen, wie Methoxycarbonyl und Ethoxycarbonyl, Carbamoyl, N-(C₁-C₄-Alkyl)-sulfamoyl, Sulfophenylamidocarbonyl, Phenylamidocarbonyl, Alkylsulfonyl von 1 bis 4 C-Atomen, Phenylsulfonyl oder Phenoxy ist,
wobei der Benzolkern in Formel (7a) und (7b) zusätzlich in ortho-Stellung zur freien Bindung, die an die Azogruppe führt, eine Hydroxygruppe enthalten kann,
- m: die Zahl Null, 1 oder 2 bedeutet (wobei diese Gruppe im Falle von m gleich Null ein Wasserstoffatom bedeutet) und
- M: die obengenannte Bedeutung hat.

Bevorzugt ist hiervon P¹ gleich Wasserstoff, Sulfo, Methyl, Methoxy, Brom oder Chlor sowie P² gleich Wasserstoff, Methyl, Methoxy und Acetylamino.

Gruppen Z-D²- sind weiterhin solche, die sich von einer Diaminobenzol- oder Diaminonaphthalin-Verbindung ableiten und den Formeln (9a) und (9b) 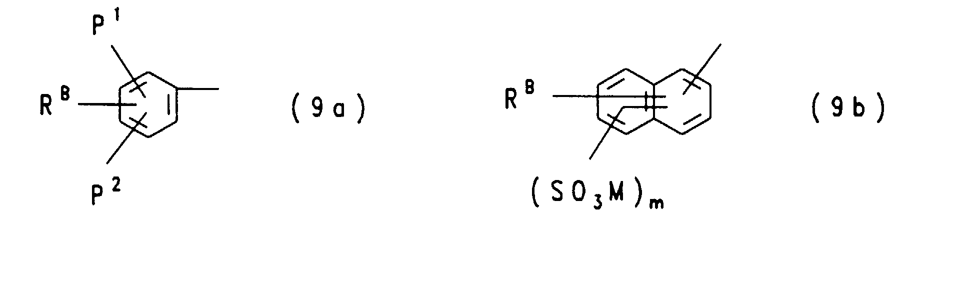 entsprechen, in welchen P¹, P², M und m eine der obengenannten Bedeutungen haben und R^{B} eine Gruppe der obengenannten und definierten allgemeinen Formel (4) oder (5) ist.

Reste E als Bestandteil einer kupplungsfähigen und diazotierbaren aromatischen Aminoverbindung der allgemeinen Formel H-E-NH₂ sind solche der allgemeinen Formeln (10a), (10b) und (10c) 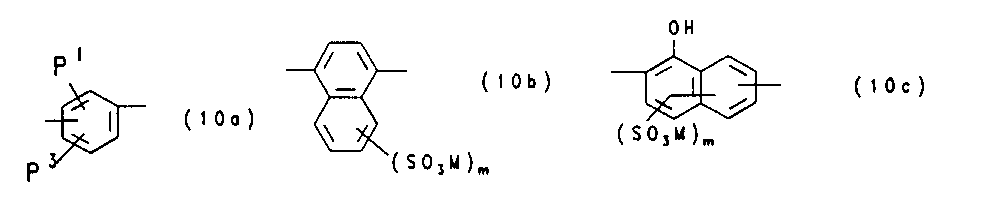 in welchen
- P¹, M und m: die oben angegebenen Bedeutungen haben und
- P³: Wasserstoff, Alkyl von 1 bis 4 C-Atomen, wie Methyl oder Ethyl, Alkoxy von 1 bis 4 C-Atomen, wie Methoxy und Ethoxy, Chlor, Alkanoylamino von 2 bis 5 C-Atomen, wie Acetylamino und Propionylamino, Benzoylamino, Ureido, Phenylureido, Alkylureido mit 1 bis 4 C-Atomen im Alkylrest, Phenylsulfonyl oder Alkylsulfonyl von 1 bis 4 C-Atomen ist.

Gruppen der allgemeinen Formeln (7a) und (7b) ohne eine Gruppe der Formel -SO₂-Y oder -SO₂-Y^{o} sind beispielsweise:
Phenyl, 2-Methyl-phenyl, 3- und 4-Methyl-phenyl, 2-Methoxy-phenyl, 3- und 4-Methoxy-phenyl, 2-Chlor-phenyl, 3- und 4-Chlor-phenyl, 2,5-Dichlor-phenyl, 2,5-Dimethyl-phenyl, 2-Methoxy-5-methyl-phenyl, 2-Methoxy-4-nitro-phenyl, 4-Phenyl-phen-1-yl, 3-Phenoxy-phenyl, 2-Sulfamoyl-phenyl, 3- und 4-Sulfamoyl-phenyl, 2-, 3- und 4-(N-Methyl-sulfamoyl)-, -(N-Ethyl-sulfamoyl)-, -(N,N-Dimethyl-sulfamoyl)- und -(N,N-Diethyl-sulfamoyl)-phenyl, 2-Sulfo-5-trifluormethyl-phenyl, 2-Nitro-phenyl, 3- und 4-Nitro-phenyl, 3-Acetylamino-phenyl, 4-Acetylamino-phenyl, 2-Carboxy-phenyl, 4-Carboxy-phenyl, 3-Carboxy-phenyl, 3-Chlor-6-carboxy-phenyl, 2-Sulfo-phenyl, 3-Sulfo-phenyl, 4-Sulfo-phenyl, 2,5-Disulfo-phenyl, 2,4-Disulfo-phenyl, 3,5-Disulfo-phenyl, 2-Methyl-5-sulfo-phenyl, 2-Methoxy-5-sulfo-phenyl, 2-Methoxy-4-sulfo-phenyl, 2-Sulfo-5-methyl-phenyl, 2-Methyl-4-sulfo-phenyl, 3-Sulfo-4-methoxy-phenyl, 5-Sulfo-2-ethoxy-phenyl, 4-Sulfo-2-ethoxy-phenyl, 2-Carboxy-5-sulfo-phenyl, 2-Carboxy-4-sulfo-phenyl, 2,5-Dimethoxy-4-sulfo-phenyl, 2,4-Dimethoxy-5-sulfo-phenyl, 2-Methoxy-5-methyl-4-sulfo-phenyl, 2-Sulfo-4-methoxy-phenyl, 2-Sulfo-4-methyl-phenyl, 2-Chlor-4-sulfo-phenyl, 2-Chlor-5-sulfo-phenyl, 2-Brom-4-sulfo-phenyl, 2,6-Dichlor-4-sulfo-phenyl, 2-Sulfo-4- und -5-chlor-phenyl, 2-Sulfo-4,5-dichlor-phenyl, 2,5-Dichlor-6-sulfo-phenyl, 2,5-Dichlor-4-sulfo-phenyl, 2-Sulfo-5-chlor-4-methyl-phenyl, 2-Sulfo-4-chlor-5-methyl-phenyl, 2-Sulfo-5-methoxy-phenyl, 2,4-Dimethoxy-6-sulfo-phenyl, 2-Sulfo-5-acetylamino-4-methyl-phenyl, 2-Methyl-4,6-disulfo-phenyl, 2,5-Disulfo-4-methoxy-phenyl, 2-Sulfo-5-nitro-phenyl, 2-Sulfo-4-nitro-phenyl, 2,6-Dimethyl-3-sulfo-phenyl, 2,6-Dimethyl-4-sulfo-phenyl, 3-Acetylamino-6-sulfo-phenyl, 4-Acetylamino-2-sulfo-phenyl, 4-Sulfo-naphth-1-yl, 3-Sulfo-naphth-1-yl, 5-Sulfo-naphth-1-yl, 6-Sulfo-naphth-1-yl, 7-Sulfo-naphth-1-yl, 8-Sulfo-naphth-1-yl, 3,6-Disulfo- und 5,7-Disulfo-naphth-1-yl, 3,7-Disulfo-naphth-1-yl, 5-Sulfo-naphth-2-yl, 6- oder 8-Sulfo-naphth-2-yl, 1,7-Disulfo-naphth-2-yl, 5,7-Disulfo-naphth-2-yl, 6,8-Disulfo-naphth-2-yl, 1,6-Disulfo-naphth-2-yl, 1-Sulfo-naphth-2-yl, 1,5-Disulfo-naphth-2-yl, 3,6-Disulfo-naphth-2-yl, 4,8-Disulfo-naphth-2-yl, 2-Hydroxy-5-sulfo-phenyl, 2-Hydroxy-4-sulfo-phenyl, 2-Hydroxy-3,5-disulfo-phenyl, 2-Hydroxy-5-acetylamino-3-sulfo-phenyl, 2-Hydroxy-3-acetylamino-4-sulfo-phenyl, 2-Hydroxy-5-chlor-4-sulfo-phenyl, 2-Hydroxy-5-methylsulfonylphenyl, 2-Hydroxy-6-nitro-4-sulfo-naphth-1-yl und 1-Hydroxy-4,8-disulfonaphth-2-yl.

Gruppen der allgemeinen Formeln (7a) und (7b) mit einer Gruppe der Formel -SO₂-Y oder -SO₂-Y^{o} sind beispielsweise:
2-(β-Sulfatoethylsulfonyl)-phenyl, 3-(β-Sulfatoethylsulfonyl)-phenyl, 4-(β-Sulfatoethylsulfonyl)-phenyl, 2-Carboxy-5-(β-sulfatoethylsulfonyl)-phenyl, 2-Chlor-3-(sulfatoethylsulfonyl)-phenyl, 2-Chlor-4-(β-sulfatoethylsulfonyl)-phenyl, 2-Brom-4-(β-sulfatoethylsulfonyl)-phenyl, 4-Methoxy-3-(β-sulfatoethylsulfonyl)-phenyl, 4-Chlor-3-(β-sulfatoethylsulfonyl)-phenyl, 2-Ethoxy-4- oder -5-(β-sulfatoethylsulfonyl)-phenyl, 2-Methyl-4-(β-sulfatoethylsulfonyl)-phenyl, 2-Methoxy-5- oder -4-(β-sulfatoethylsulfonyl)-phenyl, 2,4-Diethoxy-5-(β-sulfatoethylsulfonyl)-phenyl, 2,4-Dimethoxy-5-(β-sulfatoethylsulfonyl)-phenyl, 2,5-Dimethoxy-4-(β-sulfatoethylsulfonyl)-phenyl, 2-Methoxy-5-methyl-4-(β-sulfatoethylsulfonyl)-phenyl, 2-Sulfo-4-vinylsulfonyl-phenyl, 2-Hydroxy-4- oder -5-(β-sulfatoethylsulfonyl)-phenyl, 2-Hydroxy-5-(β-sulfatoethylsulfonyl)-phenyl, 2-Hydroxy-3-sulfo-5-(β-sulfatoethylsulfonyl)-phenyl, 6-Carboxy-1-sulfo-naphth-2-yl, 5-(β-Sulfatoethylsulfonyl)-naphth-2-yl, 6- oder 7- oder 8-(β-Sulfatoethylsulfonyl)-naphth-2-yl, 6-(β-Sulfatoethylsulfonyl)-1-sulfo-naphth-2-yl, 5-(β-Sulfatoethylsulfonyl)-1-sulfo-naphth-2-yl, 8-(β-Sulfatoethylsulfonyl)-6-sulfo-naphth-2-yl, 4-[β-(β'-Sulfatoethylsulfonyl)-ethyl]-phenyl, 3- oder 4-[β-(β'-Sulfatoethylsulfonyl)-ethylamino]-phenyl, 3- oder 4-[γ-(Vinylsulfonyl)-propylaminol-phenyl, 4-[β-(β'-Sulfatoethylsulfonyl)-ethylamino]-2- oder -3-sulfo-phenyl, 4-[γ-(β'-Sulfatoethylsulfonyl)-propylamino]-2- oder -3-sulfo-phenyl, 4-[β-(β'-Sulfatoethylsulfonyl)-ethylamino]-2-carboxy-phenyl und 4-[γ-(β'-Sulfatoethylsulfonyl)-propylamino]-2-carboxy-phenyl, des weiteren deren Aminoderivate, die statt der β-Sulfatoethylsulfonyl- oder Vinylsulfonyl-Gruppe eine durch die Alkylaminogruppe der Formel (3a) substituierte Ethylsulfonylgruppe besitzen, wie beispielsweise eine β-[N-Methyl-N-(β'-sulfoethyl)-amino]-ethylsulfonyl-, β-[N-Methyl-N-(β'-carboxyethyl)-amino]-ethylsulfonyl- oder β-[N,N-Di-(β'-hydroxyethyl)-amino]-ethylsulfonyl-Gruppe.

Gruppen entsprechend den allgemeinen Formelresten D¹-N=N-E- bzw. Z-D²-N = N-E- sind beispielsweise 4-(4'-Sulfo-phenyl)-azo-2-sulfo-phenyl, 4-(2',4'-Disulfo-phenyl)-azo-2-methoxy-5-methyl-phenyl, 4-(2',5'-Disulfo-phenyl)-azo-2-methyl-5-methoxy-phenyl, 4-(4',8'-Disulfo-naphth-2'-yl)-azo-3-acetylamino-phenyl, 4-(4'-Sulfo-phenyl)-azo-6-sulfo-naphth-1-yl, 4-[4'-(β-Sulfatoethylsulfonyl)-phenyl]-azo-2-methyl-5-methoxy-phenyl, 4-[3'-(β'-Sulfatoethylsulfonyl)-phenyl]-azo-3-methyl-phenyl, 4-[4'-(β-Sulfatoethylsulfonyl)-phenyl]-azo-3-ureido-phenyl, 4-[6'-(β-Sulfatoethylsulfonyl)-naphth-2'-yl]-azo-3-ureido-phenyl und 7-[2'-Methoxy-5'-(β-sulfatoethylsulfonyl)-phenyl]-azo-8-hydroxy-6-sulfo-naphth-3-yl.

Diaminobenzol- und Diamino-naphthalin-Verbindungen, die Teil bzw. Bestandteil der Gruppen der allgemeinen Formeln (9a) und (9b) sind, sind beispielsweise 1,4-Phenylendiamin, 2-Sulfo-1,4-phenylendiamin, 2-Carboxy-1,4-phenylendiamin, 2-Sulfo-1,4-diamino-naphthalin, 8-Sulfo-2,6-diamino-naphthalin, 1,3-Phenylen-diamin, 4-Sulfo-1,3-phenylen-diamin und 6-Sulfo-1,4-diamino-naphthalin.

Gruppen der allgemeinen Formeln (10a), (10b) und (10c) sind beispielsweise 3-Methyl-1,4-phenylen, 3-Methoxy-1,4-phenylen, 2-Methoxy-5-methyl-1,4-phenylen, 2,5-Dimethyl-1,4-phenylen, 3-Ureido-1,4-phenylen, 3-Ureido-1,4-phenylen, 3-Acetylamino-1,4-phenylen, 3-Propionylamino-1,4-phenylen, 3-Butyrylamino-1,4-phenylen, 2-Methyl-5-acetylamino-1,4-phenylen, 2-Methoxy-5-acetylamino-1,4-phenylen und 2-Sulfo-5-amino-1,4-phenylen, wobei die 4-Stellung im Phenylenrest mit der Azogruppe zum Rest D¹ bzw. D² verbunden ist, des weiteren 6-Sulfo-, 7-Sulfo- und 8-Sulfo-naphth-4,1-ylen, deren 4-Stellung zur Azogruppe des Restes E gebunden ist, und 8-Hydroxy-6-sulfo-naphth-7,2-ylen, 8-Hydroxy-6-sulfo-naphth-7,3-ylen und 8-Hydroxy-4,6-disulfo-naphth-7,3-ylen, wobei die 7-Stellung mit der Azogrunpe zum Rest E verbunden ist.

Reste K¹ und -K²-Z als Bestandteil einer Kupplungskomponente der allgemeinen Formel H-K¹ oder H-K²-Z sind solche der allgemeinen Formeln (11a) bis (11k) 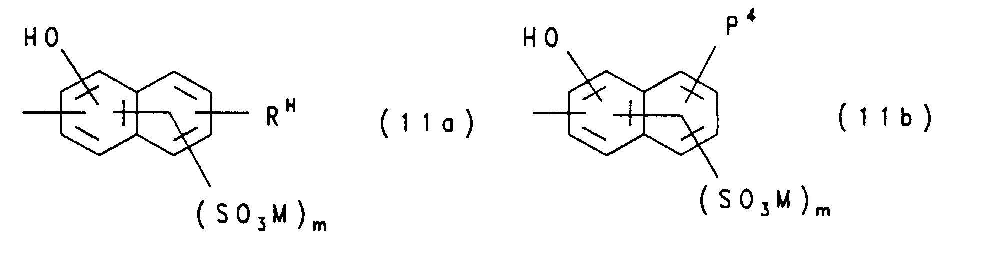 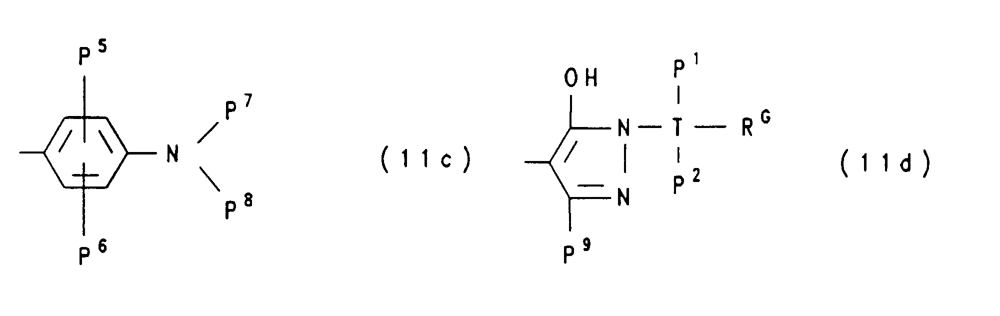 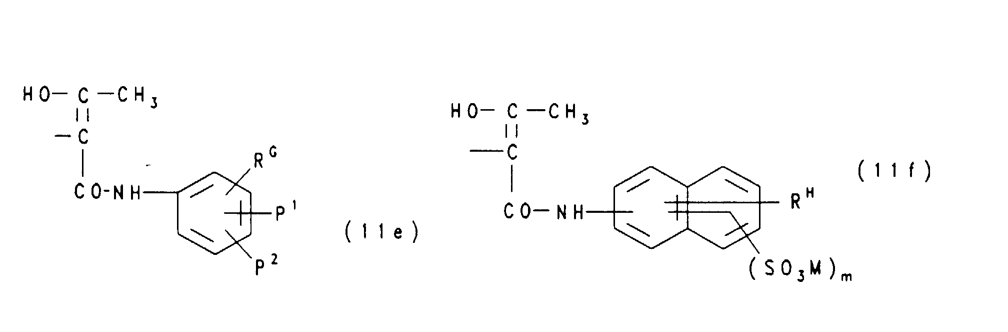 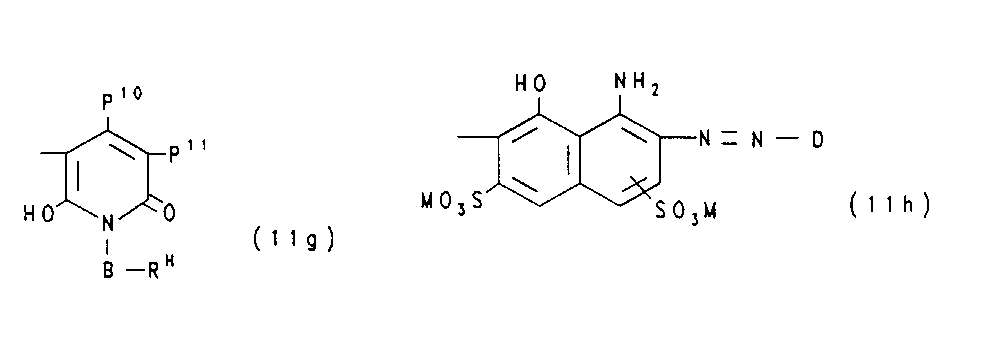 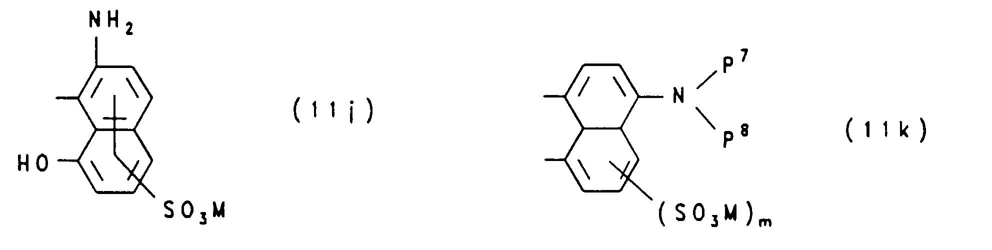 in welchen
- R^{G}, P¹, P², m und M: die obengenannten Bedeutungen haben,
- R^{H}: Wasserstoff oder eine Gruppe der oben definierten Formel -W^{o}-SO₂-Y oder -W^{o}-SO₂-Y^{o} oder eine Gruppe der Formel (4) oder (5),
- P⁴: Alkanoylamino von 2 bis 5 C-Atomen, wie Propionylamino und insbesondere Acetylamino, oder Phenylureido ist, das im Phenylrest durch Substituenten aus der Gruppe Chlor, Methyl, Methoxy, Sulfo und Carboxy und/oder durch eine Gruppe -W^{o}-SO₂-Y oder -W^{o}-SO₂-Y^{o} mit Y, Y^{o} und W^{o} obengenannter Bedeutung oder eine Gruppe der Formel (4) oder (5) substituiert sein kann, oder Benzoylamino ist, das im Phenylrest durch Substituenten aus der Gruppe Chlor, Methyl, Methoxy, Nitro, Sulfo und Carboxy und/oder durch eine Gruppe -W^{o}-SO₂-Y oder -W^{o}-SO₂-Y^{o} obiger Definition oder eine Gruppe der Formel (4) oder (5) substituiert sein kann,
- P⁵: Wasserstoff, Alkyl von 1 bis 4 C-Atomen, wie Methyl und Ethyl, Alkoxy von 1 bis 4 C-Atomen, wie Methoxy und Ethoxy, Brom, Chlor oder Sulfo ist,
- P⁶: Wasserstoff, Alkyl von 1 bis 4 C-Atomen, wie Methyl und Ethyl, Alkoxy von 1 bis 4 C-Atomen, wie Methoxy und Ethoxy, Chlor, Alkanoylamino von 2 bis 7 C-Atomen, wie Acetylamino und Propionylamino, Ureido oder Phenylureido ist,
- P⁷: Wasserstoff oder Alkyl von 1 bis 4 C-Atomen ist, das durch Hydroxy, Cyano, Carboxy, Sulfo, Sulfato, Methoxycarbonyl, Ethoxycarbonyl oder Acetoxy substituiert sein kann,
- P⁸: Wasserstoff, Alkyl von 1 bis 4 C-Atomen ist, das durch Hydroxy, Cyano, Carboxy, Sulfo, Sulfato, Methoxycarbonyl, Ethoxycarbonyl oder Acetoxy substituiert sein kann, oder Benzyl oder Phenyl, das durch Alkyl von 1 bis 4 C-Atomen, Alkoxy von 1 bis 4 C-Atomen, Chlor und/oder durch eine Gruppe -W^{o}-SO₂-Y oder -W^{o}-SO₂-Y^{o} obiger Definition oder eine Gruppe der Formel (4) oder (5) substituiert sein kann,
- P⁹: Wasserstoff, Alkyl von 1 bis 4 C-Atomen, wie Methyl, Cyano, Carboxy, Carbalkoxy von 2 bis 5 C-Atomen, wie Carbomethoxy und Carbethoxy, Carbamoyl, Phenyl oder Sulfophenyl, bevorzugt Methyl, Carboxy, Methoxycarbonyl, Ethoxycarbonyl oder Phenyl und insbesondere Methyl oder Carboxy, ist,
- T: für einen Benzol- oder Naphthalinring, bevorzugt Benzolring, steht,
- P¹⁰: Wasserstoff oder Alkyl von 1 bis 4 C-Atomen, wie Methyl, oder durch Alkoxy von 1 bis 4 C-Atomen, wie Methoxy, oder Cyano substituiertes Alkyl von 1 bis 4 C-Atomen oder Phenyl ist, bevorzugt Alkyl von 1 bis 4 C-Atomen oder Phenyl ist,
- P¹¹: Wasserstoff, Chlor, Brom, Sulfo, Carbamoyl, Methylsulfonyl, Phenylsulfonyl, Cyano oder Sulfoalkyl von 1 bis 4 C-Atomen bedeutet, bevorzugt Wasserstoff, Sulfo, Sulfoalkyl mit einem Alkylrest von 1 bis 4 C-Atomen, wie Sulfomethyl, Cyano oder Carbamoyl ist, B Alkylen von 1 bis 4 C-Atomen, das durch Sulfo, Hydroxy, Phosphato, Sulfato und Carboxy substituiert sein kann, Methylenphenylen, Ethylenphenylen, Phenylenmethylen, Phenylenethylen oder Phenylen oder im Benzolrest durch Fluor, Chlor, Brom, Methyl, Methoxy, Cyano, Sulfo, Carboxy, Acetyl, Nitro, Carbamoyl und/oder Sulfamoyl substituiertes Methylenphenylen, Ethylenphenylen oder Phenylen ist, oder der Rest -B-R^{G} für Wasserstoff steht, und
- D: ein Rest der allgemeinen Formel (7a), (7b), (9a) oder (9b) ist.

Reste -K¹ und -K²-Z sind weiterhin Gruppen der allgemeinen Formeln (12a) bis (12h) 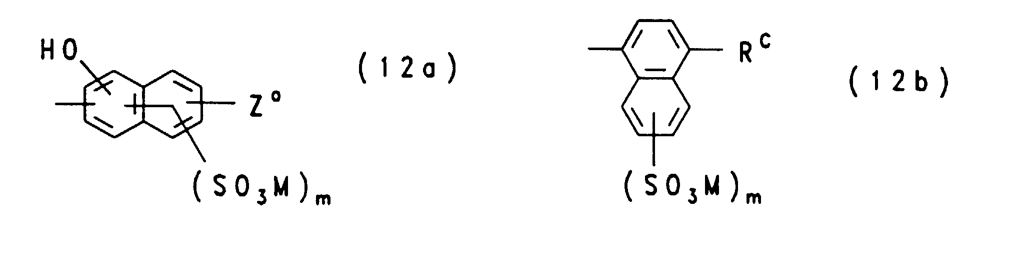 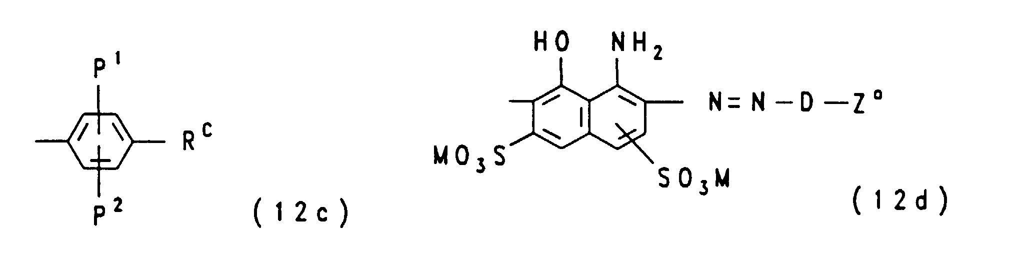 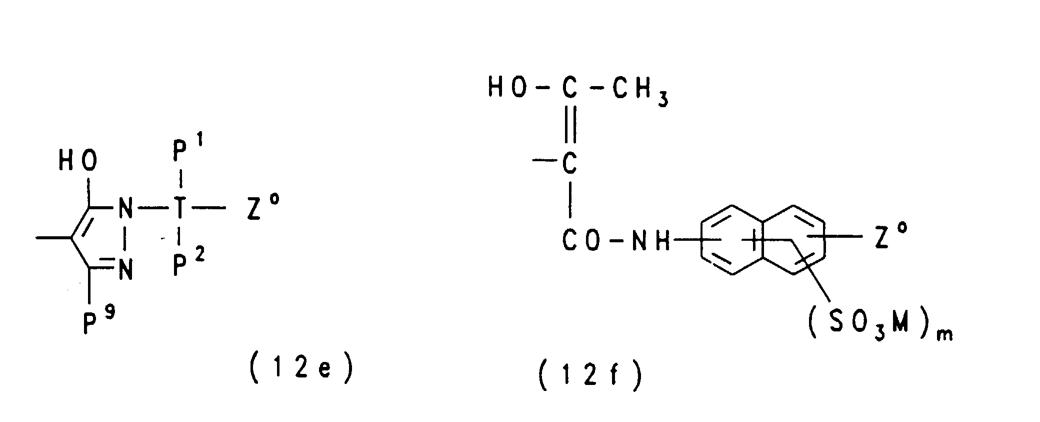 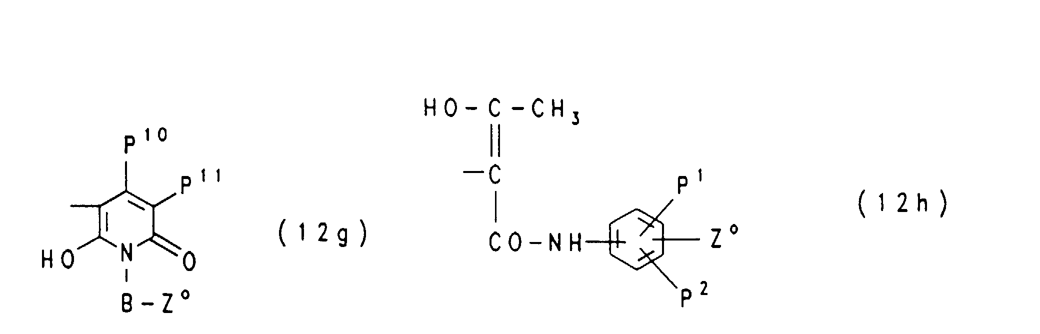 in welchen P¹, P², P⁹, P¹⁰, P¹¹, B, T, M, m und D die oben angegebenen, insbesondere bevorzugten, Bedeutungen haben und Z^{o} im Falle von K¹ für Wasserstoff steht und im Falle von K² den dort angegebenen Rest Z obiger Bedeutung hat oder eine Gruppe der allgemeinen Formel (4) oder (5) bedeutet und R^{C} Amino oder eine Gruppe der allgemeinen Formel (4) oder (5) bedeutet.

Der Rest -K-H in Formel (6e) hat eine der Bedeutungen des Restes K¹ obiger Definition oder ist eine von Gruppen der Formeln -W^{o}-SO₂-Y, -W^{o}-SO₂-Y^{o} oder (4) oder (5) freier Rest der Formel (11b), (11c) oder (11k) oder ein Rest der Formel (12b) oder (12c) mit R^{C} gleich Amino.

In den obigen Formeln (11a), (11b) und (12a) steht die freie Bindung, die zur Azogruppe führt, in ortho-Stellung zur Hydroxygruppe an den aromatischen Kern gebunden.

Gruppen K¹ entsprechend den allgemeinen Formeln (11) und (12) sind beispielsweise 1-Hydroxy-naphth-2-yl, 2-Hydroxy-naphth-1-yl, 6- und 7-Sulfo-2-hydroxy-naphth-1-yl, 2-Hydroxy-3,6-disulfo-naphth-1-yl, 2-Hydroxy-6,8-disulfo-naphth-1-yl, 4-Sulfo-1-hydroxy-naphth-2-yl, 4,6-Disulfo- und 4,7-Disulfo-1-hydroxy-naphth-2-yl, 1-Amino-3-methyl-phen-4-yl, 1-Amino-2-methoxy-5-methyl-phen-4-yl, 2,5-Dimethyl-1-amino-phen-4-yl, 3-Ureido-1-amino-phen-4-yl, 3-Acetylamino-1-amino-phen-4-yl, 6-Sulfo-1,3-diamino-phen-4-yl, 1-Amino-naphth-4-yl, 1-Amino-6-sulfo-naphth-4-yl, 1-Amino-8-sulfo-naphth-4-yl, 2-Amino-5,7-disulfo-naphth-1-yl, 1-Amino-8-hydroxy-6-sulfo-naphth-7-yl, 1-Amino-8-hydroxy-6-sulfo-naphth-2-yl, 1-Amino-8-hydroxy-2,4-disulfo-naphth-7-yl, 1-Hydroxy-8-acetylamino-3-sulfo-naphth-2-yl, 1-Benzoylamino-8-hydroxy-3,6- und -4,6-disulfo-naphth-7-yl, 3-Benzoylamino-8-hydroxy-6-sulfo-naphth-7-yl, 3-Amino-8-hydroxy-6-sulfo-naphth-7-yl, 3-Acetylamino-8-hydroxy-6-sulfo-naphth-7-yl, 3-Amino-4,6-disulfo-8-hydroxy-naphth-7-yl, 2-Amino-8-hydroxy-6-sulfo-naphth-7-yl, 2-Acetylamino-8-hydroxy-6-sulfo-naphth-7-yl, 2-Amino-8-hydroxy-3,6-disulfo-naphth-7-yl, 2-Acetylamino-8-hydroxy-3,6-disulfo-naphth-7-yl, 4-Amino-8-hydroxy-6-sulfo-naphth-7-yl, 1-Amino-8-hydroxy-3,6- und -4,6-disulfo-naphth-7-yl, 1-Amino-8-hydroxy-3,6- und -4,6-disulfo-naphth-2-yl, 1 -Acetylamino-8-hydroxy-3, 6- und -4,6-disulfo-naphth-2-yl, 1-(4'-Aminobenzoyl)-8-hydroxy-3,6- und -4,6-disulfo-naphth-7-yl, 1-(3'-Aminobenzoyl)-8-hydroxy-3,6- und -4,6-disulfo-naphth-7-yl, 1-Phenyl-3-methyl-5-hydroxy-pyrazol-4-yl, 1-(4'-Sulfophenyl)-3-methyl-5-hydroxy-pyrazol-4-yl, 1-(4'-Sulfophenyl-3)-carboxy-5-hydroxy-pyrazol-4-yl, 1-(2',5'-Disulfophenyl)-3-methyl-5-hydroxy-pyrazol-4-yl, 1-(2'-Methyl-4'-sulfo-phenyl)-3-carboxy-5-hydroxy-pyrazol-4-yl, 1-(4',8'-Disulfo-naphth-2'-yl)-3-methyl-5-hydroxy-pyrazol-4-yl, 1-(5',7'-Disulfo-naphth-2'-yl)-3-methyl-5-hydroxy-pyrazol-4-yl, 1-(2',5'-Dichlor-4'-sulfophenyl)-3-methyl-5-hydroxy-pyrazol-4-yl, 4-Methyl-6-hydroxy-pyrid-2-on-3-yl, 1-N-Ethyl-3-cyano-4-methyl-6-hydroxy-pyrid-2-on-4-yl, 1-N-Ethyl-3-sulfomethyl-4-methyl-6-hydroxy-pyrid-2-on-4-yl, 1-N-Ethyl-3-carbamoyl-4-methyl-6-hydroxy-pyrid-2-on-4-yl, 1-(2'-Methoxy-5'-sulfophenylaminocarbonyl)-2-oxo-prop-1-yl, 1-(2'-Methoxy-5'-methyl-4'-sulfophenylaminocarbonyl)-2-oxo-prop-1-yl, 1-Amino-8-hydroxy-7-(4'-sulfophenyl-azo)-3,6-disulfo-naphth-7-yl, 1-Amino-8-hydroxy-7-(2',5'-disulfophenyl-azo)-3,6-disulfo-naphth-7-yl und 2-Hydroxy-6-carboxy-naphth-1-yl, wobei in diesen Resten eine eventuell vorhandene Aminogruppe durch eine Gruppe entsprechend der allgemeinen Formel (3a) mit bevorzugt R^{o} gleich Wasserstoff ersetzt sein kann, des weiteren 1-[4'-(β-Sulfatoethylsulfonyl)-phenyl]-3-methyl-5-hydroxy-pyrazol-4-yl, 1-[2'-Methoxy-5'-methyl-4'-(β-sulfatoethylsulfonyl)-phenyl]-3-methyl-5-hydroxy-pyrazol-4-yl, 1-[2'-Methoxy-5'-methyl-4'-(β-sulfatoethylsulfonyl)-phenylaminocarbonyl]-2-oxo-prop-1-yl und 1-Amino-8-hydroxy-7-[4'-(β-sulfatoethylsulfonyl)-phenylazo]-3,6-disulfo-naphth-2-yl und des weiteren Reste der eben genannten Art, in welchen die β-Sulfatoethylsulfonyl-Gruppe durch die Vinylsulfonylgruppe oder durch eine Sulfonylgruppe entsprechend der allgemeinen Formel (3a) ausgetauscht ist, wie beispielsweise durch die β-[N-Methyl-N-(β'-sulfoethyl)-amino]-ethylsulfonyl- oder β-(N-Methyl-N-carboxymethyl)-ethylsulfonyl-Gruppe.

Reste K³ in den Formeln (6d) und (6e) mit einem metallkomplex-bindenden Sauerstoffatom sind insbesondere solche der Formeln (13a) bis (13e) 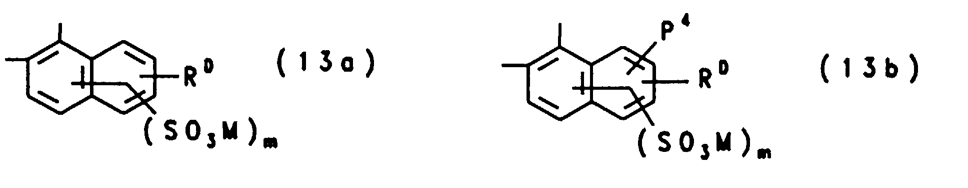 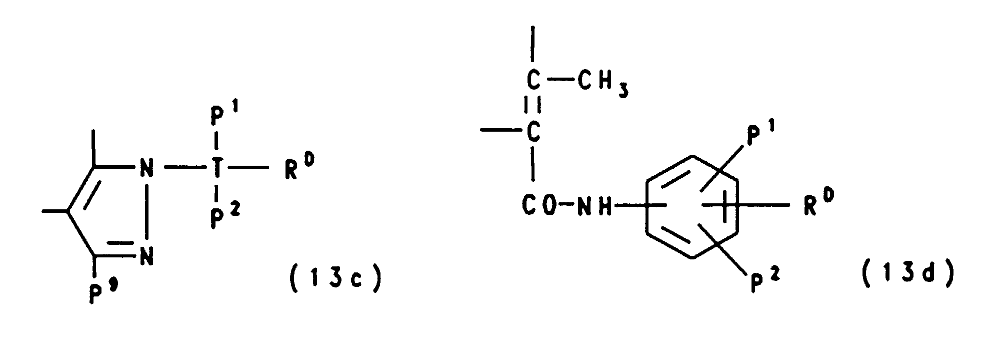 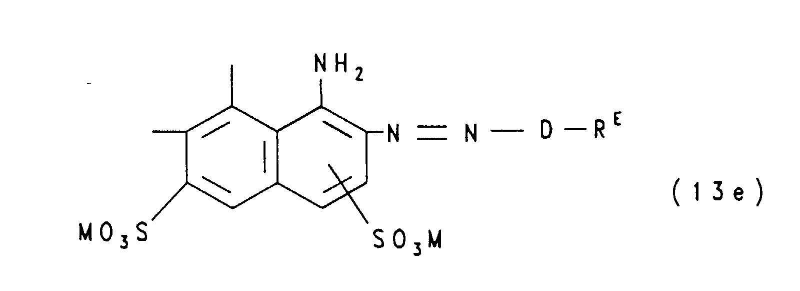 in welchen die einzelnen Formelglieder eine der obengenannten Bedeutungen haben,
- R^{D}: ein Rest Z oder ein Rest R^{B} obengenannter Bedeutung ist und
- R^{E}: ein Rest R^{B} oder R^{H} obiger Definition ist.

Phthalocyaninfarbstoffe sind beispielsweise solche, die der allgemeinen Formel (14) 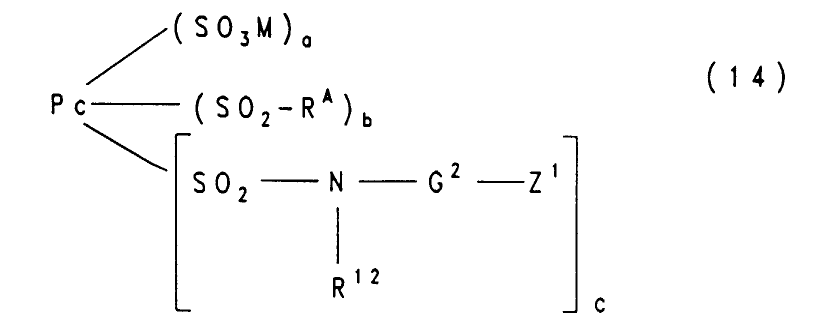 entsprechen, in welcher bedeuten:
- Pc: ist der Rest eines Nickel- oder bevorzugt Kupferphthalocyanins;
- R^{A}: ist eine Aminogruppe der Formel -NR¹³R¹⁴, in welcher R¹³ und R¹⁴ unabhängig voneinander Wasserstoff oder Alkyl von 1 bis 4 C-Atomen, das durch Hydroxy oder Sulfo substituiert sein kann, bedeuten, oder ist ein heterocyclischer, N-haltiger Rest, wie der Morpholino- oder Piperidino-Rest;
- R¹²: ist Wasserstoff oder Alkyl von 1 bis 4 C-Atomen, wie Methyl und Ethyl;
- G²: ist Phenylen, das durch 1 oder 2 Substituenten aus der Gruppe Alkyl von 1 bis 4 C-Atomen, wie Ethyl und Methyl, Halogen, wie Chlor und Brom, Carboxy und Sulfo substituiert sein kann, beispielsweise Sulfophenylen, oder ist Alkylen von 2 bis 6 C-Atomen, wie Ethylen;
- a: ist eine Zahl von Null bis 2,
- b: ist eine Zahl von Null bis 3 und
- c: ist eine Zahl von 1 bis 2,
wobei die Summe von ( a + b + c) gleich einer Zahl von 2 bis 4 ist;
- Z¹: ist Vinylsulfonyl, β-Sulfatoethylsulfonyl oder eine Gruppe der allgemeinen Formel (3a) oder (5).

Phthalocyaninfarbstoffe sind insbesondere solche, die den allgemeinen Formeln (14a) und (14b) 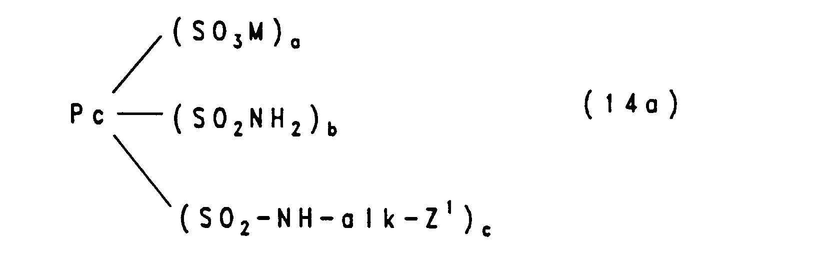 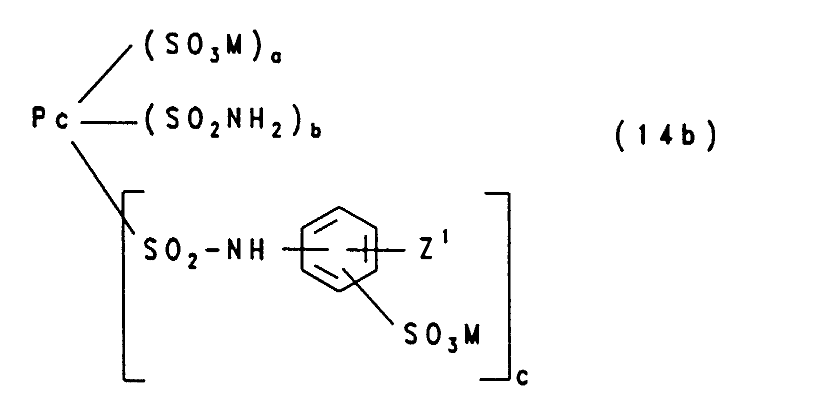 entsprechen, in welchen M und Z¹ die obengenannte Bedeutung haben, a für eine Zahl von 1 bis 2 steht, b eine Zahl von 0 bis 2 ist und c eine Zahl von 1 bis 2 bedeutet, wobei die Summe von ( a + b + c) gleich einer Zahl von 2 bis 4 ist, Pc den Rest eines Nickel- oder bevorzugt Kupferphthalocyanins darstellt und alk Alkylen von 2 bis 4 C-Atomen, bevorzugt Ethylen, ist.

Kupferformazanfarbstoffe sind beispielsweise solche, die der allgemeinen Formel (15) 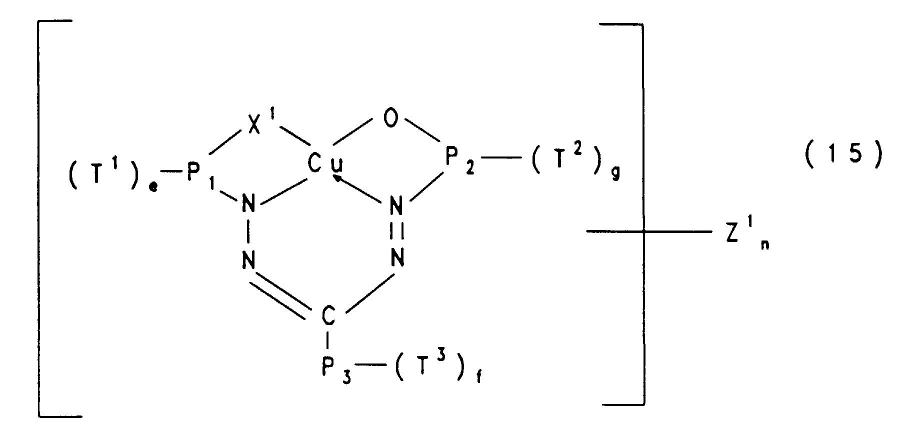 entsprechen, in welcher bedeuten:
- Z¹ und n: haben eine der obengenannten Bedeutungen;
- X¹: ist ein Sauerstoffatom oder bevorzugt die Carbonyloxygruppe der Formel -COO- ;
- P₁ und P₂: bedeuten, unabhängig voneinander, jedes einen Benzol- oder Naphthalinring, wobei an P₁ das Stickstoffatom und die Gruppe X¹ ortho-ständig zueinander und an P₂ das Sauerstoffatom und das Stickstoffatom ortho-ständig zueinander gebunden sind und die Benzolkerne bzw. Napthalinkerne noch durch einen oder zwei Substituenten aus der Gruppe Halogen, wie Chlor, Nitro, Alkyl von 1 bis 4 C-Atomen, wie Methyl und Ethyl, Alkoxy von 1 bis 4 C-Atomen, wie Methoxy und Ethoxy, Sulfamoyl, durch Alkyl von 1 bis 4 C-Atomen mono- oder disubstituiertes Sulfamoyl, Alkylsulfonyl von 1 bis 4 C-Atomen, wie Methylsulfonyl und Ethylsulfonyl, und Phenylsulfonyl substituiert sein können, wobei sowohl P₁ als auch P₂ beide bevorzugt einen Benzolring bedeuten;
- P₃: ist eine geradkettige oder verzweigte Alkylengruppe von 2 bis 6 C-Atomen, vorzugsweise von 2 bis 4 C-Atomen, die durch eine Sulfophenylgruppe substituiert sein kann, oder ist eine Phenylengruppe oder eine Naphthylengruppe, die durch 1 oder 2 Substituenten aus der Gruppe Methyl, Ethyl, Methoxy, Ethoxy und Chlor substituiert sein können, wobei P₃ bevorzugt ein Benzolring ist;
- T¹, T² und T³: ist, unabhängig voneinander, jedes Sulfo- oder Carboxy, bevorzugt Sulfo;
- e, f und g: stellen, unabhängig voneinander, jedes die Zahl Null, 1 oder 2 dar, wobei die Summe von ( e + f + g) eine ganze Zahl von 1 bis 4 bedeutet und vorzugsweise 2 oder 3, insbesondere 2, ist, wobei im Falle von e oder f oder g gleich Null die Gruppe T¹ bzw. T² bzw. T³ ein Wasserstoffatom bedeutet;
- die Gruppe Z¹: steht an einen aromatischen Rest von P₁, P₂ oder P₃, bevorzugt an P₂, gebunden.

Kupferformazanfarbstoffe sind insbesondere solche, in welchen P₁ und P₂ beide für einen Benzolring stehen, die Gruppe Z¹ an P₂ gebunden ist und T¹ und T² jedes eine Sulfogruppe bedeutet, wobei e und g beide für die Zahl 1 stehen. Sofern die Gruppe Z¹ an P₁ gebunden ist, ist e die Zahl Null, g die Zahl 2 und T² eine Sulfogruppe. Bevorzugt ist weiterhin die Gruppierung -P₃-(T³)_{f} der Phenyl- oder ein 2- oder 4-Sulfo-phenyl-Rest.

Von den Kupferformazan-Farbstoffen sind insbesondere diejenigen hervorzuheben, die der allgemeinen Formel (15a) 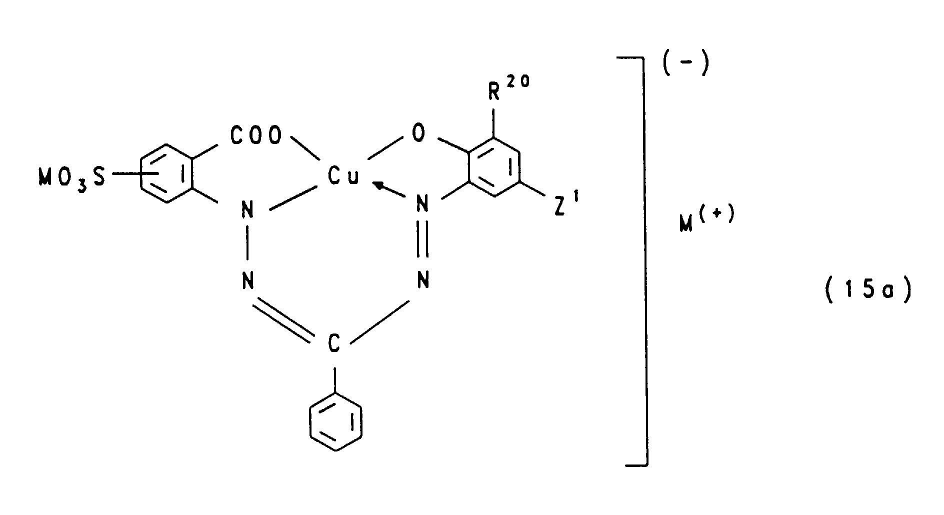 entsprechen, in welcher M und Z¹ die obengenannten, insbesondere bevorzugten Bedeutungen haben und R²⁰ Wasserstoff oder Sulfo ist.

Triphendioxazinfarbstoffe sind beispielsweise solche, die der allgemeinen Formel (16) 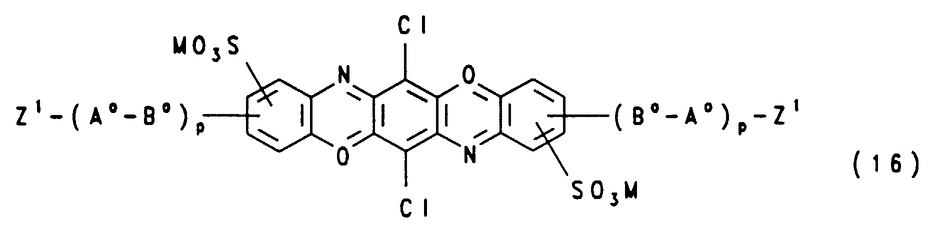 entsprechen, in welcher die beiden Sulfogruppen -SO₃M bevorzugt in ortho-Stellung zum Sauerstoffatom des heterocyclischen Ringes an den Benzolkern gebunden sind, M und Z eine der obengenannten Bedeutungen haben, B^{o} die Oxigruppe -O- oder bevorzugt die Aminogruppe -NH- ist und A^{o} Alkylen von 2 bis 6 C-Atomen ist, das durch 1 oder 2 Heterogruppen, wie Gruppen der Formeln -O- , -NH- , -NH-CO- und/oder -CO-NH- , unterbrochen und/oder das substituiert sein kann, bspw. durch Hydroxy, Sulfo, Sulfato oder Carboxy, oder Cyclohexylen ist und p die Zahl Null oder 1 ist.

Triphendioxazinfarbstoffe sind beispielsweise auch solche entsprechend der allgemeinen Formel (17) 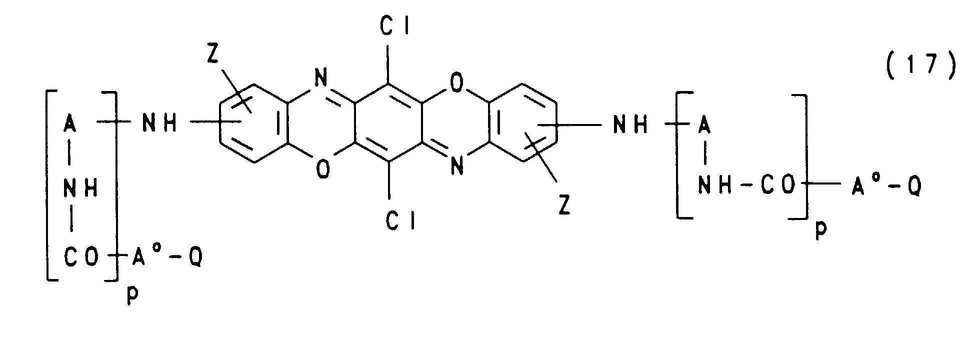 in welcher
- M und Z: eine der obengenannten Bedeutungen haben,
- A: Alkylen von 2 bis 4 C-Atomen ist,
- A^{o}: eine der für Formel (16) genannten Bedeutungen hat,
- p: für die Zahl Null oder 1 steht und
- Q: Sulfo, Carboxy oder Sulfato bedeutet.

Anthrachinonfarbstoffe sind beispielsweise solche, die der allgemeinen Formel (18) 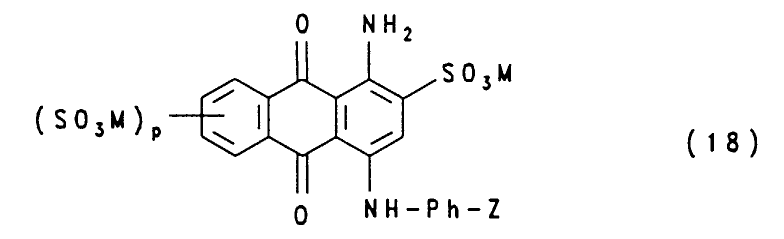 entsprechen, in welcher
- M, Z und p: eine der obengenannten Bedeutungen haben und
- Ph: Phenylen ist, das durch 1 oder 2 Substituenten aus der Gruppe Alkyl von 1 bis 4 C-Atomen, wie Methyl und Ethyl, Alkoxy von 1 bis 4 C-Atomen, wie Methoxy und Ethoxy, Halogen, wie Chlor und Brom, Carboxy und Sulfo substituiert sein kann, oder Phenylen ist, das durch 3 oder 4 Methylgruppen substituiert ist.

Farbstoffe entsprechend den allgemeinen Formeln (1) und (1A) sind bekannt und zahlreich in der Literatur beschrieben, wie beispielsweise in den U.S.-Patentschriften Nrs. 4 336 190, 4 492 654, 4 046 754, 4 577 015, 3 359 286, 3 268 548 und 3 385 843. Farbstoffe entsprechend der allgemeinen Formel (2) bzw. Verfahrensweisen zu deren Herstellung sind aus der U.S.-Patentschrift Nr. 3 802 837 bekannt.

Ebenso sind die Aminoverbindungen der allgemeinen Formel (3) allgemein bekannte Verbindungen. Solche Verbindungen sind beispielsweise N-Methyl-N-(β-sulfoethyl)-amin (Methyltaurin), N,N-Di-(β-hydroxyethyl)-amin, N-Methyl-N-(carboxymethyl)-amin, N-Methyl-N-(γ-carboxypropyl)-amin, N-Ethyl-N-(γ-carboxypropyl)-amin, N-Ethyl-N-(β-sulfoethyl]-amin, N-Methyl-N-(β-carboxyethyl)-amin, N-Ethyl-N-(β-carboxyethyl]-amin und N-Methyl-N-(ω-carboxypentyl)-amin.

Die Farbstoffe der allgemeinen Formel (2) lassen sich durch Umsetzung von Farbstoffen der allgemeinen Formel (1) mit einer Aminoverbindung der allgemeinen Formel (3) herstellen, beispielsweise indem man einen Farbstoff der allgemeinen Formel (1) in wäßriger Lösung mit der zur Vinylsulfonylgruppe äquimolaren Menge des Amins der allgemeinen Formel (3) versetzt und die Umsetzung bei einem pH-Wert zwischen 7 und 9 und einer Temperatur zwischen 25 und 50°C durchführt. Der gebildete Farbstoff der allgemeinen Formel (2) kann sodann in üblicher Weise nach Neutralisation und Einstellen der Syntheselösung auf einen pH-Wert zwischen 4 und 7, bevorzugt zwischen 5,5 und 6,5, mittels einer organischen oder anorganischen Säure, wie beispielsweise Salzsäure, Essigsäure oder Phosphorsäure, durch Ausfällen mit einem Elektrolytsalz (Aussalzen), wie Natriumchlorid oder Kaliumchlorid, oder durch Sprühtrocknung der Syntheselösung isoliert werden.
Farbstoffe der allgemeinen Formel (2) lassen sich auch in der Weise herstellen, daß man einen Farbstoff der allgemeinen Formel (1A) in wäßriger Lösung mit der zur β-Sulfatoethylsulfonyl-Gruppe äquimolaren Menge eines Amins der allgemeinen Formel (3) und mit einer alkalisch wirkenden anorganischen Verbindung, wie beispielsweise Natriumhydroxid, Natriumcarbonat oder Trinatriumphosphat, bevorzugt in wäßriger Lösung, versetzt und einen pH-Wert zwischen 8,5 und 13, bevorzugt zwischen 9 und 12,5 und insbesondere bevorzugt zwischen 9 und 10,5, einstellt und während der Umsetzung hält; abhängig von der gewählten Reaktionstemperatur zwischen 20 und 100°C, bevorzugt zwischen 80 und 95°C, ist die Umsetzung nach etwa 5 bis 15 Minuten beendet. Intermediär wird aus dem β-Sulfatoethylsulfonyl-Farbstoff der allgemeinen Formel (1A) der Vinylsulfonyl-Farbstoff der allgemeinen Formel (2) gebildet. Die Reaktionszeit, die möglichst nicht wesentlich überschritten werden sollte, liegt beispielsweise bei einer Temperatur zwischen 88 und 92°C und einem pH-Wert von 9 zwischen 5 und 10 Minuten und bei einem pH-Wert zwischen 12 und 12,5 bei einer Temperatur zwischen 20 und 25°C bei etwa 5 Minuten. Bei einem pH-Wert zwischen 9 und 10 und einer Temperatur zwischen 40 und 60°C ist die Umsetzung nach etwa 15 Minuten beendet.

Die erfindungsgemäßen Färbepräparationen können in fester, wie pulverförmiger oder granulierter Form, und in flüssiger Form, so als wäßrige Lösung, vorliegen. Sie lassen sich in üblicher Weise durch Mischen der Einzelkomponenten, wie der Farbstoffe der allgemeinen Formeln (1) und (2) oder des oder der Farbstoffe der allgemeinen Formel (1) und/oder (1A) und des Amins der allgemeinen Formel (3), gegebenenfalls unter Lösung in Wasser, herstellen.
Färbepräparationen (A) mit den Farbstoffen der allgemeinen Formeln (1) und (2) können auch in der Weise hergestellt werden, daß man einen Farbstoff (oder Farbstoffe) der allgemeinen Formel (1) und/oder (1A) in 1-molarer Menge in wäßriger Lösung mit einem Amin der allgemeinen Formel (3) im erfindungsgemäßen, in bezug auf die β-Sulfatoethylsulfonyl- und Vinylsulfonyl-Gruppen moläquivalenten Verhältnis zwischen den Farbstoffen der allgemeinen Formeln (1) und (1A) und dem Amin (3) und mit einer alkalisch wirkenden Verbindung, wie beispielsweise die oben genannten, versetzt oder miteinander vermischt und die Umsetzung analog den oben angegebenen, insbesondere bevorzugten, Verfahrensbedingungen bei einer Temperatur zwischen 20 und 100°C und einem pH-Wert zwischen 8,5 und 13 durchführt. Nach Bildung der Farbstoffmischung aus dem Farbstoff der allgemeinen Formel (1) und dem Farbstoff der allgemeinen Formel (2) wird die alkalische Syntheselösung, wie oben angegeben, neutralisiert und auf einen pH-Wert zwischen 4 und 7 eingestellt und die erfindungsgemäße Farbstoffmischung durch Sprühtrocknung oder durch Aussalzen aus der Syntheselösung isoliert.

Sowohl die festen Farbstoffpräparationen als auch deren wäßrigen Lösungen enthalten, wie bei wasserlöslichen Farbstoffen im allgemeinen üblich, Elektrolytsalze, wie Natriumchlorid, Kaliumchlorid oder Natriumsulfat, die aus deren Vorprodukte stammen oder durch die Synthese oder durch die Isolierung, wie beispielsweise durch Aussalzen, in die Präparation gelangen. Die Färbepräparationen können weiterhin die für das Färben von Fasermaterialien mit faserreaktiven Farbstoffen oder zur Stabilisierung einer Präparation üblichen Hilfsmittel enthalten, wie beispielsweise löslichkeitsverbessernde Mittel, wie Kondensationsprodukte aus Formaldehyd und einer gegebenenfalls Alkylgruppen enthaltenden Naphthalinsulfonsäure, wobei das Molgewicht des Kondensationsproduktes bevorzugt zwischen 5000 und 15000 liegt und dessen Sulfonierungsgrad zwischen 80 und 150 % beträgt, ebenso Netzmittel, Sikkative, schimmelverhindernde Mittel, Antischaummittel und Wasserenthärter. Des weiteren können die erfindungsgemäßen Färbepräparationen (B) auch bereits die für die färberische Anwendung erforderliche Menge an einem alkalisch wirkenden Mittel, wie Natriumcarbonat oder Trinatriumphosphat, enthalten.

Die erfindungsgemäßen Färbepräparationen mit den Farbstoffen der allgemeinen Formeln (1) und (2) bzw. den Farbstoffen der allgemeinen Formel (1) und/oder (1A) und einem Amin der allgemeinen Formel (3) eignen sich zum Färben von carbonamidgruppenhaltigem Fasermaterial, wie natürlichem amidgruppenhaltigem Fasermaterial, beispielsweise Wolle und Seide, und synthetischen Polyamidfasern. Insbesondere sind sie mit großem Vorteil zum Färben von synthetischen Polyamidfasern geeignet. Mit den erfindungsgemäßen Färbepräparationen erhält man farbstarke Färbungen von hoher Egalität und hoher Reinheit und Brillanz des Farbtons. Zudem ergeben die mit den erfindungsgemäßen Färbepräparationen erhältlichen Färbungen, insbesondere auf synthetischen Polyamidfasern, im Vergleich zu den Färbungen, die mit bisher üblichen Färbepräparationen und Farbstoffen erhältlich sind, deutlich bessere Farbausbeuten und weisen deutlich bessere Echtheitseigenschaften sowie eine sehr gute Egalität und Farbdurchdringung der gefärbten Faser auf.

Synthetische Polyamidfasern, die mit den erfindungsgemäßen Präparationen besonders vorteilhaft gefärbt werden können, sind beispielsweise Fasern aus Polyamid-6 (Poly-ε-caprolactam), Polyamid-6,6 (Poly-hexamethylen-adipinsäureamid), Polyamid-7, Polyamid-6,12 (Poly-hexamethylendodecansäureamid), Polyamid-11, Polyamid-12 und Copolyamide mit Polyamid-6,6 oder mit Polyamid-6, wie beispielsweise Polymere aus Hexamethylendiamin, ε-Caprolactam und Adipinsäure und Polymere aus Adipinsäure, Hexamethylendiamin und Isophthalsäure oder aus Adipinsäure, Hexymethylendiamin und 2-Methyl-pentamethylen-diamin oder 2-Ethyltetramethylen-diamin. Hiervon sind bevorzugt geeignet Copolyamide mit Polyamid-6,6, die bis zu 15 Gew.-%, wie beispielsweise 0,5 bis 15 Gew.-%, Poly-hexamethylen-isophthalsäureamid oder Poly-(2-methyl-pentamethylen)-adipinsäureamid oder Poly-(2-ethyl-tetramethylen)-adipinsäureamid enthalten. Weiterhin hiervon bevorzugt sind Copolyamide des Polyamids-6 mit bis zu 15 Gew.-%, wie beispielsweise 0,5 bis 15 Gew.-%, Polyamid-6,6.

Mit besonderem Vorteil lassen sich die erfindungsgemäßen Färbepräparationen zum Färben von Mikrofasern dieser synthetischen Polyamide einsetzen. Es werden Färbungen dieser Mikrofasern mit sehr hoher Egalität und Durchfärbung erhalten. Unter Mikrofasern werden solche Fasern verstanden, die aus (durch Schmelzspinnung erhältliche) Fäden mit einer individuellen Fadenfeinheit von weniger als 1 denier (1,1 dTex) aufgebaut sind (s. Chemiefasern/Textilind. 94, 877-800 (1982), "Properties and Production of Micro Filament Yarns").

Die erfindungsgemäßen Färbepräparationen lassen sich mit besonderem Vorteil und den deutlich verbesserten Färbeergebnissen zum Färben von Fasermaterialien aus synthetischem Polyamid, insbesondere Polyamid-6 und Polyamid-6,6, einsetzen, das einen Amino-Endgruppen-Gehalt von mindestens 60 Gramm-Äquivalenten, wie von 60 bis 100 Gramm-Äquivalenten, insbesondere von 70 oder größer als 70 Gramm-Äquivalenten, freier Amino-Endgruppen pro 1000 kg Polyamidfaser (Polymer) aufweist. Hiervon sind insbesondere solche Polyamidfasern geeignet, die mindestens 85 Gew.-% Poly-hexamethylen-adipinsäureamid oder mindestens 85 % Gew.-Poly-ε-caprolactam enthalten. Mit besonderem Vorteil eignen sich die erfindungsgemäßen Färbepräparationen zum Färben von solchen Polyamid-Fasermaterialien, die aus mindestens 85 Gew.-% Poly-hexamethylen-adipinsäureamid und bis zu 15 Gew.-%, wie 0,5 bis 15 Gew.-%, Poly-hexamethylen-isophthalsäureamid, einem Polyamidprodukt aus Isophthalsäure und Hexamethylendiamin, aufgebaut sind.

Diese Fasermaterialien mit einem Amino-Endgruppen-Gehalt von mindestens 60 Gramm-Äquivalenten besitzen eine Relative Viskosität von 40 bis 60, bevorzugt von größer als 45, gemessen in 90 %iger wäßriger Ameisensäure bei 20°C.

Zur Erzielung eines hohen Anteils an freien Amino-Endgruppen im Polymer bzw. der Polyamidfaser wird neben der üblichen hydrolytischen Aufspaltung von Carbonamid-Brücken im gebildeten Polymer auch bereits bei der Synthese des Polymers ein Überschuß an dem Diamin, wie Hexamethylendiamin, eingesetzt, um so eine Amino-Endgruppen-Konzentration von mindestens 60 Gramm-Äquivalenten, wie 60 bis 100 Gramm-Äquivalenten, bevorzugt von mehr als 70, insbesondere bevorzugt von mehr als 75 Gramm-Äquivalenten, an endständigen Aminogruppen pro 1000 kg eingesetzter Polyamidfaser zu erreichen. Solche Diamine sind neben dem Hexamethylendiamin beispielsweise auch 2-Methyl-pentamethylen-diamin, 2-Ethyl-tetramethylen-diamin, 1,3-Diamino-toluol und 1,4-Bis-(aminomethyl)-cyclohexan.

Solche Polyamidpolymere und -fasern sind in den später folgenden Beispielen B-1 bis B-3 beschrieben.

Das amidgruppenhaltige Fasermaterial kann in den üblichen Fabrikationsformen zur Anwendung kommen, wie beispielsweise als Garn, dieses in Form von Strängen oder von Wickelkörpern, oder als Gewebe oder Gewirke oder in Form von Ausstattungsstoffen, wie Teppich- und Polstermaterialien. Die verwendbaren Amidfasern können auch mit anderen synthetischen Fasern, wie beispielsweise Polyurethanfasern, wie Spandex, und/oder mit Cellulosefasermaterialien, wie Baumwolle, vermischt sein.

Besonders vorteilhaft können mit den erfindungsgemäßen Färbepräparationen solche Polyamid-Fasermaterialien gefärbt werden, die einen Amino-Endgruppen-Gehalt von 70 bis 95, bevorzugt 70 bis 85 oder 75 bis 90, g-Äquivalenten pro 1000 kg Polymer (Polyamidfaser) enthalten. Die erfindungsgemäßen Färbepräparationen liefern auf den genannten Polyamid-Fasermaterialien, wie bereits erwähnt, Färbungen ausgezeichneter Qualität, insbesondere auch bei Fasern, wenn diese aus solchen Fäden aufgebaut sind, die eine individuelle Fadenfeinheit von 4 denier (4,4 dTex) und weniger, insbesondere von 2 denier (2,2 dTex) und weniger, wie beispielsweise weniger als 1,70 denier (1,87 dTex) oder gar von weniger als 1 denier (1,1 dTex), wie bis zu 0,8 denier (0,88 dTex), aufweisen.

Die färberische Anwendung der erfindungsgemäßen Färbepräparationen zum Färben und Bedrucken der genannten Fasermaterialien, insbesondere synthetischen Polyamid-Fasermaterialien, kann nach bisher bekannten und üblichen Verfahrensweisen erfolgen, wie aus wäßriger Flotte im Ausziehverfahren bei Temperaturen zwischen 40 und 130°C oder durch Klotzen des Fasermaterials mit der Färbeflotte oder Aufsprühen der Färbeflotte und anschließender Wärmebehandlung des imprägnierten Materials bei Temperaturen zwischen etwa 80 und 130°C, wie beispielsweise durch gesättigten Heißdampf oder durch Mikrowellenbehandlung. In der Regel erfolgt die Fixierung der Farbstoffe auf dem carbonamidgruppenhaltigen Fasermaterial innerhalb des angegebenen Temperaturbereiches bei einem pH-Wert zwischen 3 und 7,5, beim Färben eines Polyamid-Fasermaterials bevorzugt zwischen 3,5 und 7, insbesondere zwischen 5,5 und 6,5.

Geht man von erfindungsgemäßen Färbepräparationen (B) aus, so führt man die Färbung bevorzugt in der Weise durch, daß man die wäßrige, die Präparation (B) enthaltende Färbeflotte zunächst mit einem alkalisch wirkenden Mittel, soweit noch nicht vorhanden, wie Natriumhydroxid, Natriumcarbonat oder Trinatriumphosphat, bevorzugt in wäßriger Lösung, versetzt, einen pH-Wert von 8,5 bis 13, bevorzugt 9 bis 10,5 einstellt, die Lösung auf 60 bis 100°C, bevorzugt 80 bis 95°C, für etwa 10 bis 15 Minuten erhitzt, sodann einen pH-Wert von 3,5 bis 7, bevorzugt 5,5 bis 6,5, einstellt, die Färbeflotte gegebenenfalls, abhängig von der Art der anzuwendenden Färbe-Verfahrensweise, mit Wasser verdünnt, das Fasermaterial hinzugibt und die Färbung innerhalb dieses pH-Bereiches und, sofern es ein Ausziehverfahren betrifft, bei einer Temperatur zwischen 40 und 110°C, bevorzugt zwischen 60 und 95°C, während 40 bis 90 Minuten durchführt, sodann eine Färbetemperatur zwischen 40 und 60°C einstellt, mit einem alkalisch wirkenden Mittel, wie beispielsweise Natriumcarbonat, einen pH-Wert zwischen 10 und 11 einstellt, innerhalb dieses Temperatur- und pH-Bereiches die Färbung noch etwa 15 Minuten fortführt und anschließend die erhaltene Färbung in üblicher Weise fertigstellt, wie durch Spülen mit Wasser, durch Behandlung in einem ein nichtionogenes Waschmittel enthaltenen Bad bei 80°C, durch Spülen mit einem wenig Essigsäure enthaltenden wäßrigen Bad und erneutes Spülen mit kaltem und warmem Wasser und Trocknen.

Verfährt man zur Herstellung von Färbungen des Fasermaterials nach einem Klotz- oder Druckverfahren, so kann man in der Weise vorgehen, daß man zunächst eine konzentrierte wäßrige Lösung der Färbepräparation (B) nach der gemäß den obigen Angaben alkalischen Behandlung auf einen pH-Wert zwischen 3,5 und 7 einstellt, erforderliche Hilfsmittel, wie Verdicker, zusetzt, die erhaltene Klotzflotte oder Druckpaste auf das Fasermaterial aufbringt, das geklotzte oder bedruckte Fasermaterial einer Wärmbehandlung zwischen 80 und 130°C, beispielsweise durch Heißluft, gesättigten Heißdampf oder Mikrowellenbestrahlung, während etwa 15 Minuten aussetzt, anschließend mit einer alkalischen, wie beispielsweise Natriumhydroxid, Natriumcarbonat, Trinatriumphosphat oder Wasserglas enthaltenden, wäßrigen Lösung überklotzt oder übersprüht und die Wärmebehandlung bei etwa 60 bis 100°C für etwa 15 Minuten fortsetzt. Anschließend wird die so hergestellte Färbung in der oben angegebenen üblichen Weise fertiggestellt.

Bevorzugt erfolgt die Färbung der Fasermaterialien gemäß einem Ausziehverfahren bei einem Verhältnis zwischen Fasermaterial/Färbeflotte von 1:40 bis 1:3 innerhalb der oben angegebenen Temperatur- und pH-Bereiche (40 bis 110°C und pH von 3,5 bis 7), beispielsweise von Strängen in einem Jigger bei einem Flottenverhältnis von 1:3 bis 1:10 oder von Geweben und Gewirken in einem Kessel bei einem Flottenverhältnis von 1:10 bis 1:40, bevorzugt von 1:10 bis 1:20. So verfährt man insbesondere in der Weise, daß man zunächst eine etwa 5 bis 10 gew.-%ige wäßrige Lösung der Färbepräparation (B) mit einem alkalischen Mittel, wie Natriumhydroxid, Natriumcarbonat oder Trinatriumphosphat (sofern das alkalische Mittel in der Präparation noch nicht enthalten ist), in fester Form oder in Form einer wäßrigen Lösung versetzt, hiermit einen pH-Wert zwischen 9 und 11 einstellt, den Ansatz auf eine Temperatur zwischen 60 und 95°C, bevorzugt zwischen 80 und 90°C, erwärmt, ihn in diesem Temperaturbereich unter Einhaltung des gewählten pH-Wertes für etwa 10 bis 15 Minuten hält, sodann mit einer wäßrigen Säure, wie Salzsäure oder Essigsäure, neutralisiert, mit Wasser zu dem gewünschten Flottenverhältnis verdünnt, einen pH-Wert zwischen 3,5 und 7, bevorzugt zwischen 4 und 6,8 und insbesondere bevorzugt zwischen 5,5 und 6,5, einstellt, das Fasermaterial in die 30 bis 40°C warme Färbeflotte (Färbebad) einbringt, dem gegebenenfalls noch ein übliches Hilfsmittel zugesetzt wurde, die Temperatur der Färbeflotte (des Färbebades) stetig innerhalb von 15 bis 20 Minuten auf 80 bis 100°C erhöht, die Färbung für etwa 45 bis 60 Minuten bei diesem pH-Bereich weiterführt, sodann die Temperatur der Flotte oder Bades auf 60°C erniedrigt, mittels eines alkalisch wirkenden Mittels, wie Natriumcarbonat, einen pH-Wert von 10 bis 11, bevorzugt 10,5, einstellt, die Färbung für etwa 15 Minuten bei 60°C weiterführt und sodann in der oben angegebenen Verfahrensweise das gefärbte Fasermaterial durch Spülen etc. fertigstellt.

Bei der Färbung des Fasermaterials mit Hilfe einer Färbepräparation (A), enthaltend Farbstoffe der allgemeinen Formel (1) und (2), ist eine alkalische Vorbehandlung der wäßrigen Lösung der Präparation nicht erforderlich. Der Färbeprozeß in einem Auszieh-Färbeverfahren kann beispielsweise in der Weise erfolgen, daß man das Fasermaterial in eine wäßrige Färbeflotte (Färbebad) der Färbepräparation (A) mit einem pH-Wert zwischen 3,5 und 7, bevorzugt zwischen 4 und 6,8, insbesondere zwischen 5,5 und 6,5, in dem gewünschten Flottenverhältnis einbringt, das Färbebad von 40°C stetig innerhalb von etwa 30 bis 40 Minuten auf 80 bis 100°C erwärmt, die Färbung innerhalb dieses Temperaturbereiches während 45 bis 60 Minuten weiterführt, sodann in gleicher Weise, wie oben angegeben, die Färbeflotte (das Färbebad) auf 60°C abkühlt, einen pH-Wert zwischen 10 und 11 einstellt, die Färbung für etwa 15 weitere Minuten weiterführt und das gefärbte Material anschließend in der angegebenen Weise fertigstellt.

In ähnlicher Weise kann die Färbepräparation (A) in ein Klotz- oder Druckverfahren eingesetzt werden. Hierbei geht man bevorzugt in der Weise vor, daß man eine wäßrige Klotzflotte oder Druckpaste der Färbepräparation (A), die auf einen pH-Wert zwischen 3,5 und 7, bevorzugt zwischen 4 und 6,8, insbesondere zwischen 5,5 und 6,5, eingestellt wurde, auf das Fasermaterial, bevorzugt in Form eines Gewebes oder Gewirkes, aufbringt und zur Fixierung der Farbstoffe das so imprägnierte oder bedruckte Polyamidfasermaterial einer Wärmbehandlung zwischen 80 und 130°C, beispielsweise durch Heißluft, gesättigten Heißdampf oder durch Mikrowellenbestrahlung, während etwa 15 Minuten aussetzt, anschließend das so behandelte Fasermaterial mit einer alkalischen, wie beispielsweise Natriumhydroxid, Natriumcarbonat, Trinatriumphosphat oder Wasserglas, enthaltenden wäßrigen Lösung überklotzt oder übersprüht und die Wärmebehandlung bei etwa 60 bis 100°C für etwa 15 Minuten fortsetzt. Anschließend wird das so gefärbte Material in der bereits angegebenen üblichen Weise fertiggestellt.

Die nachfolgenden Beispiele dienen zur Erläuterung der Erfindung. Die Teile sind Gewichtsteile und die Prozentangaben stellen Gewichtsprozente dar, sofern nicht anders vermerkt. Gewichtsteile stehen zu Volumenteilen im Verhältnis von Kilogramm zu Liter.

### Beispiel 1

26 Teile ( = 46 Moläquivalente) des Farbstoffes der Formel (A) 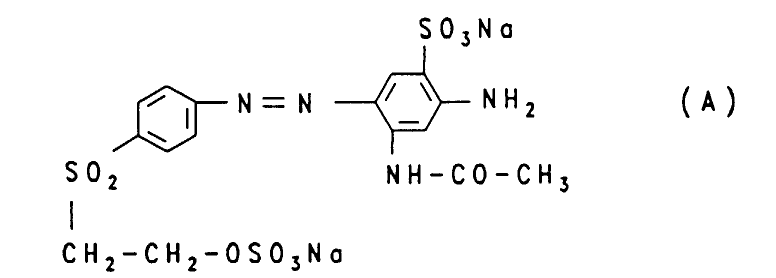 und 1,5 Teile ( = 9,2 Moläquivalente) des N-Methyl-taurin-Natriumsalzes werden in einer Lösung von 7 Teilen Trinatriumphosphat in 1000 Teilen Wasser von 20°C gelöst. Die erhaltene Farbstofflösung besitzt einen pH-Wert von etwa 10. Sie wird auf etwa 90°C erwärmt und während etwa 10 Minuten bei 90°C gehalten, danach mit einer 60 %igen wäßrigen Essigsäure auf einen pH-Wert von 5,5 gestellt und mit Wasser auf ein Volumen von 5000 Vol.-Teilen aufgefüllt.

Von dieser Färbe-Stammlösung werden 20 Vol.-Teile entnommen und mit Wasser, das etwa 0,1 % eines handelsüblichen Netzmittels enthält, auf 100 Vol.-Teile aufgefüllt. In dieses Färbebad werden 10 Teile eines Gewebes aus der im später folgenden Beispiel B-1 beschriebenen Nylonfaser gegeben, der pH-Wert des Färbebades mit Essigsäure auf 5,5 gestellt und das Bad sodann stetig innerhalb von 30 Minuten auf 98°C geheizt. Der Färbeprozeß wird bei dieser Temperatur noch 45 Minuten weitergeführt, das Bad sodann auf 60°C abgekühlt, mit konzentrierter wäßriger Natronlauge auf einen pH-Wert von 10,5 gestellt und bei diesem pH-Wert und der Temperatur von 60°C noch 15 Minuten gehalten.
Anschließend wird das Bad abgelassen und das gefärbte Gewebe in üblicher Weise durch Spülen mit kaltem Wasser, durch Waschen in einem ein nichtionogenes Waschmittel enthaltenden wäßrigen Bad bei 80°C, durch erneutes Spülen in einem wenig Essigsäure enthaltenen Bad von 40°C und abschließendes Spülen mit kaltem Wasser, Zentrifugieren und Trocknen fertiggestellt.

Es wird eine Färbung von hoher Farbtiefe erhalten, die einen reinen und klaren goldgelben Farbton aufweist. Die Färbung zeichnet sich durch hohe Egalität aus und ist farbstärker, reiner und brillanter als bei Einsatz des Farbstoffes (A) alleine.

### Beispiel 2

Eine Lösung von 24 Teilen ( = 38 Moläquivalenten) des Farbstoffes der Formel (B) 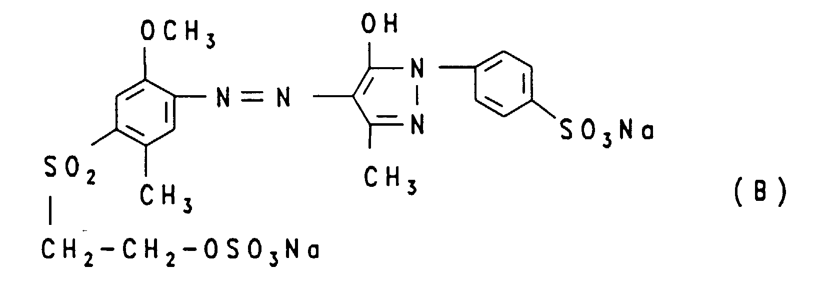 in 1000 Teilen Wasser wird mit 60 Vol.-Teilen einer 10 %igen wäßrigen Trinatriumphosphat-Lösung versetzt. Der Ansatz wird auf 85°C erwärmt und bei dieser Temperatur gehalten, bis sich ein konstanter pH-Wert von etwa 9,2 einstellt, danach noch etwa 5 Minuten weitergerührt, sodann mit 2,14 Teilen ( = 13,3 Moläquivalenten) des Natriumsalzes von N-Methyl-taurin versetzt, etwa 3 Minuten weitergerührt, mit Essigsäure auf einen pH-Wert von etwa 6 eingestellt, auf Raumtemperatur abgekühlt und mit Wasser auf 5000 Vol.-Teile aufgefüllt.

20 Vol.-Teile dieser Stammlösung werden mit 80 Teilen Wasser verdünnt. Zu diesem Färbebad werden 10 Teile eines Garnes aus der im später folgenden Beispiel B-1 beschriebenen Polyamidfaser gegeben. Das Gewebe wird in dem Bad zunächst für 5 Minuten bei 20°C bewegt, das Färbebad sodann innerhalb von 30 Minuten auf 90°C erwärmt und die Färbung bei dieser Temperatur unter Einhaltung eines pH-Wertes von etwa 5,5 (mittels verdünnter wäßriger Essigsäure) während 45 Minuten weitergeführt und sodann bei 60°C und einem pH-Wert von 10 während 10 Minuten zu Ende gebracht. Anschließend wird das Färbebad abgelassen und das gefärbte Gewebe analog den Angaben im Beispiel 1 nachbehandelt.

Es wird eine farbstarke Färbung erhalten, die einen klaren und brillanten gelben Farbton aufweist und von hoher Egalität ist.

Verfährt man dagegen nach der Verfahrensweise des Beispieles 2 ohne Zusatz von N-Methyl-taurin entsprechend bekannten Verfahrensweisen, so wird eine Färbung von nur ungenügender Egalität und einem neutralen gelben Farbton erhalten.

### Beispiel 3

a) Eine Lösung von 24 Teilen ( = 38 Moläquivalenten) des Farbstoffes der Formel (B) in 1000 Teilen Wasser wird mit 120 Vol.-teilen einer 5 %igen wäßrigen Trinatriumphosphat-Lösung versetzt. Der Ansatz wird auf 85°C erwärmt und bei dieser Temperatur gehalten, bis sich ein konstanter pH-Wert von 9,2 einstellt. Der Ansatz wird noch etwa 5 Minuten weitergerührt, sodann mit 1,84 Teilen ( = 11,4 Moläquivalenten) des Natriumsalzes von N-Methyltaurin versetzt, etwa 3 Minuten weitergerührt, mit Essigsäure auf einen pH-Wert von etwa 6 eingestellt, auf Raumtemperatur abgekühlt und sprühgetrocknet.
   Man erhält ein elektrolytsalzhaltiges Farbstoffpulver mit den Farbstoffen der Formeln (C) und (D) 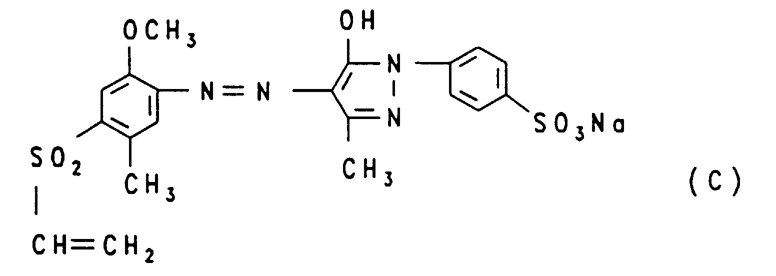 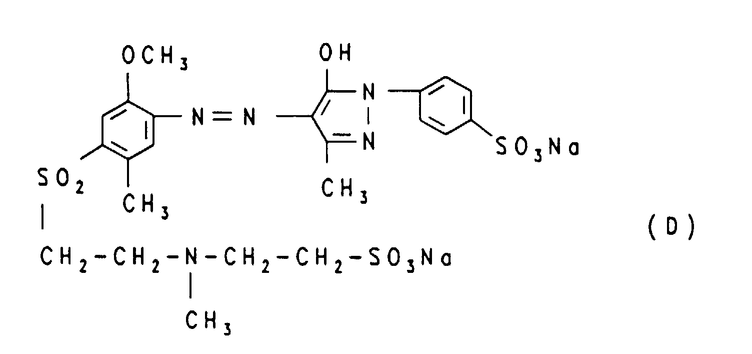 in einem molaren Mischungsverhältnis von etwa 70:30.
b) Etwa 0,2 Teile dieses Farbstoffpulvers werden in 200 Teilen Wasser von 20°C gelöst. Es werden 10 Teile eines Gewebes aus der im später folgenden Beispiel B-1 beschriebenen Polyamidfaser hinzugegeben, mittels verdünnter wäßriger Essigsäure, sofern erforderlich, ein pH-Wert von 5,5 eingestellt, das Gewebe einige Minuten in dem Färbebad bewegt und dieses sodann innerhalb von 30 Minuten auf 90°C erwärmt. Der Färbeprozeß wird noch 45 Minuten unter Einhaltung eines pH-Wertes von 5,5 weitergeführt. Nach Abkühlen des Färbebades wird ein pH-Wert von etwa 10,5 eingestellt und die Färbung unter weiterem Bewegen des Gewebes nach etwa 15 Minuten beendet.
   Das Gewebe wird aus dem Bad herausgenommen und in der im Beispiel 1 angegebenen Verfahrensweise fertiggestellt.
   Es wird eine farbstarke Färbung erhalten, die einen klaren und brillanten gelben Farbton aufweist und von hoher Egalität ist.

### Beispiel 4

65 Teile eines elektrolytsalzhaltigen (vorwiegend natriumchloridhaltigen) Farbstoffpulvers, enthaltend 31 Teile ( = 50 Moläquivalente) des Farbstoffes der Formel (E) 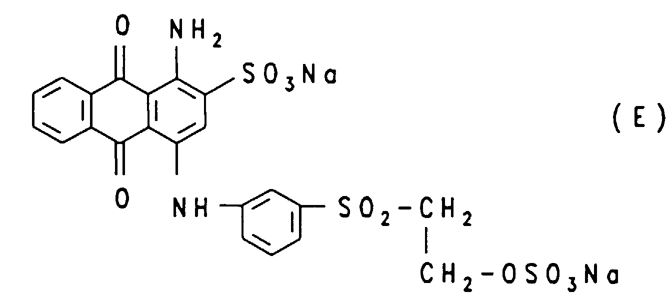 und 3,2 Teile ( = 20 Moläquivalente) des N-Methyl-taurin-Natriumsalzes, werden in einer Lösung von 4 Teilen Natriumcarbonat in 1000 Teilen Wasser von 20°C gelöst. Die erhaltene Farbstofflösung besitzt einen pH-Wert von 9 bis 10. Sie wird auf etwa 90°C erwärmt und während etwa 10 Minuten bei 90°C gehalten, danach mit einer 50 %igen wäßrigen Essigsäure auf einen pH-Wert von 5,5 gestellt und mit Wasser auf ein Volumen von 5000 Vol.-Teilen aufgefüllt.

Von dieser Färbe-Stammlösung werden 20 Vol.-Teile entnommen und mit Wasser, das etwa 0,2 % eines handelsüblichen Netzmittels enthält, auf 100 Vol.-Teile aufgefüllt. In dieses Färbebad werden 10 Teile eines Gewebes aus der im später folgenden Beispiel B-1 beschriebenen Nylonfaser gegeben, der pH-Wert des Färbebades mit Essigsäure auf 5,5 gestellt und das Bad sodann stetig innerhalb von 50 Minuten auf 98°C geheizt. Der Färbeprozeß wird bei dieser Temperatur noch 45 Minuten weitergeführt, das Bad sodann auf 60°C abgekühlt, mit konzentrierter wäßriger Natronlauge auf einen pH-Wert von 10,5 gestellt und bei diesem pH-Wert und der Temperatur von 60°C noch 15 Minuten gehalten.
Anschließend wird das Bad abgelassen und das gefärbte Gewebe in üblicher Weise durch Spülen mit kaltem Wasser, durch Waschen in einem ein nicht-ionogenes Waschmittel enthaltenden wäßrigen Bad bei 80°C, durch erneutes Spülen in einem wenig Essigsäure enthaltenen Bad von 40°C und abschließendes Spülen mit kaltem Wasser, Zentrifugieren und Trocknen fertiggestellt.

Es wird eine Färbung von hoher Farbtiefe erhalten, die einen reinen und klaren blauen Farbton aufweist. Die Färbung zeichnet sich durch hohe Egalität aus.

### Beispiel 5

33 Teile ( = 33 Moläquivalente) des Farbstoffes der Formel (F) 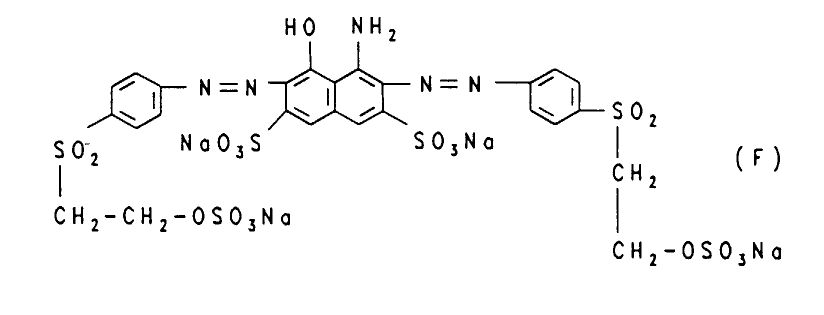 und 2,4 Teile ( = 17 Moläquivalente) N-Methyl-taurin werden in einer Lösung von 10 Teilen Trinatriumphosphat in 1000 Teilen Wasser von 20°C gelöst. Die erhaltene Farbstofflösung besitzt einen pH-Wert von etwa 10. Sie wird auf etwa 90°C erwärmt und während etwa 10 Minuten bei 90°C gehalten, danach mit einer 50 %igen wäßrigen Essigsäure auf einen pH-Wert von 5,5 gestellt und mit Wasser auf ein Volumen von 5000 Vol.-Teilen aufgefüllt.

Von dieser Färbe-Stammlösung werden 20 Vol.-Teile entnommen und mit Wasser, das etwa 0,1 % eines handelsüblichen Netzmittels enthält, auf 100 Vol.-Teile aufgefüllt. In dieses Färbebad werden 10 Teile eines Gewebes aus der im später folgenden Beispiel B-1 beschriebenen Nylonfaser gegeben, der pH-Wert des Färbebades mit Essigsäure auf 5,5 gestellt und das Bad sodann stetig innerhalb von 30 Minuten auf 98°C geheizt. Der Färbeprozeß wird noch 45 Minuten bei 98°C weitergeführt, das Bad sodann auf 60°C abgekühlt, mit konzentrierter wäßriger Natronlauge auf einen pH-Wert von 10,5 gestellt und bei diesem pH-Wert und der Temperatur von 60°C noch 15 Minuten gehalten. Anschließend wird das Bad abgelassen und das gefärbte Gewebe in üblicher Weise durch Spülen mit kaltem Wasser, durch Waschen in einem ein nicht-ionogenes Waschmittel enthaltenden wäßrigen Bad bei 80°C, durch erneutes Spülen in einem wenig Essigsäure enthaltenen Bad von 40°C und abschließendes Spülen mit kaltem Wasser, Zentrifugieren und Trocknen fertiggestellt.

Es wird eine Färbung von hoher Farbtiefe erhalten, die einen klaren marineblauen Farbton aufweist. Die Färbung zeichnet sich durch hohe Egalität aus.

### Beispiel 6

28 Teile ( = 50 Moläquivalente) des Farbstoffes der Formel (G) 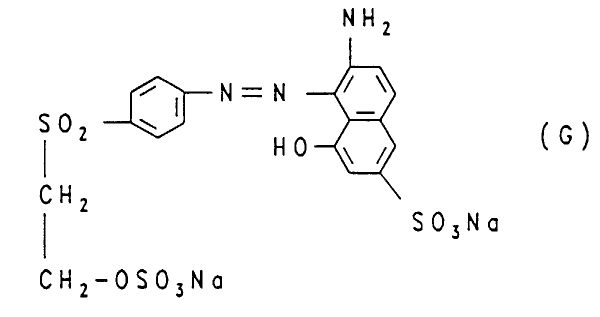 und 1,6 Teile ( = 10 Moläquivalente) des N-Methyl-taurin-Natriumsalzes werden in einer Lösung von 7 Teilen Trinatriumphosphat in 1000 Teilen Wasser von 20°C gelöst. Die erhaltene Farbstofflösung besitzt einen pH-Wert von etwa 10. Sie wird auf etwa 90°C erwärmt und während etwa 10 Minuten bei 90°C gehalten, danach mit einer 60 %igen wäßrigen Essigsäure auf einen pH-Wert von 5,5 gestellt und mit Wasser auf ein Volumen von 5000 Vol.-Teilen aufgefüllt.

Von dieser Färbe-Stammlösung werden 20 Vol.-Teile entnommen und mit Wasser, das etwa 0,2 % eines handelsüblichen Netzmittels enthält, auf 100 Vol.-Teile aufgefüllt. In dieses Färbebad werden 10 Teile eines Gewebes aus der im später folgenden Beispiel B-1 beschriebenen Nylonfaser gegeben, der pH-Wert des Färbebades mit Essigsäure auf 5,5 gestellt und das Bad sodann stetig innerhalb von 30 Minuten auf 98°C geheizt. Der Färbeprozeß wird bei dieser Temperatur noch 45 Minuten weitergeführt, das Bad sodann auf 60°C abgekühlt, mit konzentrierter wäßriger Natronlauge auf einen pH-Wert von 10,5 gestellt und bei diesem pH-Wert und der Temperatur von 60°C noch 15 Minuten gehalten.
Anschließend wird das Bad abgelassen und das gefärbte Gewebe in üblicher Weise durch Spülen mit kaltem Wasser, durch Waschen in einem ein nicht-ionogenes Waschmittel enthaltenden wäßrigen Bad bei 80°C, durch erneutes Spülen in einem wenig Essigsäure enthaltenen Bad von 40°C und abschließendes Spülen mit kaltem Wasser, Zentrifugieren und Trocknen fertiggestellt.

Es wird eine Färbung von hoher Farbtiefe erhalten, die einen reinen und klaren roten Farbton aufweist. Die Färbung zeichnet sich durch hohe Egalität aus.

### Beispiel 7

Gemäß den Angaben des Beispieles (3a) werden die beiden nachstehend angegebenen Farbstoffe der Formeln (H) und (J) 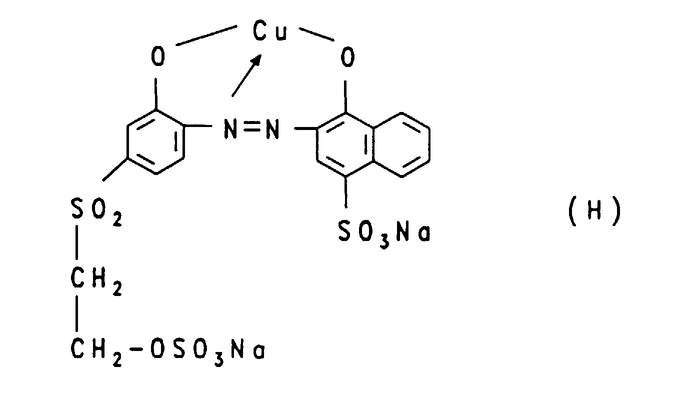 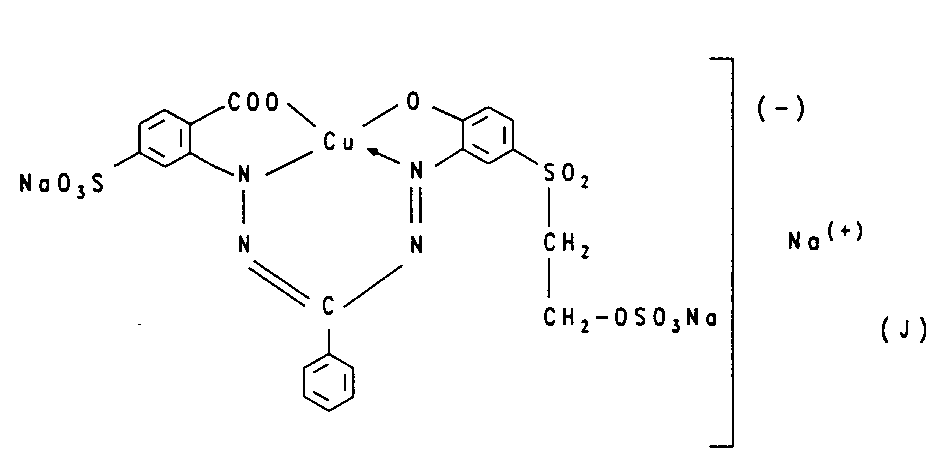 und der Farbstoff der Formel (B) in jeweils getrennten Ansätzen mit Trinatriumphosphat und in den in Beispiel (3a) angegebenen Moläquivalent-Teilen mit N-Methyl-taurin umgesetzt.

Die nach Sprühtrocknung erhaltenen Farbstoffpulver aus den Farbstoffen (B), (H) und (J) werden im Verhältnis von 20 : 10 : 6 Teilen miteinander vermischt. Mit 0,36 Teilen dieser Farbstoffmischung werden analog den Angaben des Beispieles (3b) 10 Teile des Polyamidfaser-Gewebes von Beispiel B-1 gefärbt. Es wird eine farbstarke Färbung in rotstichigem Braunton von hoher Egalität erhalten.

### Beispiel 8

Gemäß den Angaben des Beispieles (3a) werden die Farbstoffe der Formeln (E) und (H) und der Farbstoff der Formel (K) 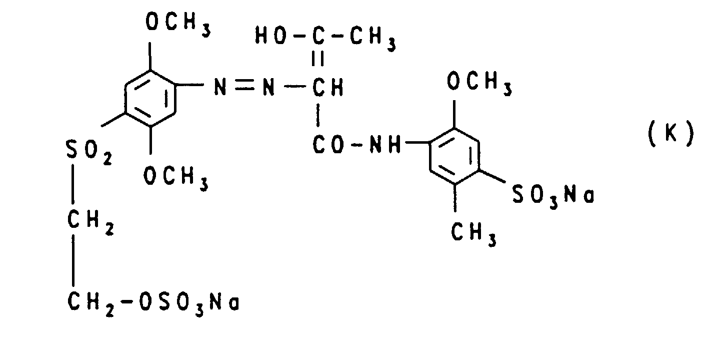 in jeweils getrennten Ansätzen mit Trinatriumphosphat und in den in Beispiel (3a) angegebenen Moläquivalent-Teilen N-Methyl-taurin umgesetzt.

Die nach Sprühtrocknung erhaltenen Farbstoffpulver aus den Farbstoffen (E), (H) und (K) werden im Verhältnis von 5:5:8 Teilen miteinander vermischt. Mit 0,36 Teilen dieser Farbstoffmischung wird analog den Angaben des Beispieles (3b) 10 Teile des Polyamidfaser-Gewebes von Beispiel B-1 gefärbt. Es wurde eine farbstarke braune Färbung von hoher Egalität erhalten.

### Beispiel 9

23 Teile ( = 30 Moläquivalente) des Farbstoffes der Formel (J) und 1,1 Teile ( = 12 Moläquivalente) N-Methyl-amino-essigsäure werden in einer Lösung von 5 Teilen Trinatriumphosphat in 1000 Teilen Wasser von 20°C gelöst. Die erhaltene Farbstofflösung besitzt einen pH-Wert von etwa 10. Sie wird auf etwa 90°C erwärmt und während etwa 10 Minuten bei 90°C gehalten, danach mit einer 50 %igen wäßrigen Essigsäure auf einen pH-Wert von 5,5 gestellt und mit Wasser auf ein Volumen von 5000 Vol.-Teilen aufgefüllt.

Von dieser Färbe-Stammlösung werden 20 Vol.-Teile entnommen und mit Wasser, das etwa 0,2 % eines handelsüblichen Netzmittels enthält, auf 100 Vol.-Teile aufgefüllt. In dieses Färbebad werden 10 Teile eines Gewebes aus der im später folgenden Beispiel B-1 beschriebenen Nylonfaser gegeben, der pH-Wert des Färbebades mit Essigsäure auf 5,5 gestellt und das Bad sodann stetig innerhalb von 30 Minuten auf 98°C geheizt. Der Färbeprozeß wird noch 45 Minuten bei 98°C weitergeführt, das Bad sodann auf 60°C abgekühlt, mit konzentrierter wäßriger Natronlauge auf einen pH-Wert von 10,5 gestellt und bei diesem pH-Wert und der Temperatur von 60°C noch 15 Minuten gehalten. Anschließend wird das Bad abgelassen und das gefärbte Gewebe in üblicher Weise durch Spülen mit kaltem Wasser, durch Waschen in einem ein nicht-ionogenes Waschmittel enthaltenden wäßrigen Bad bei 80°C, durch erneutes Spülen in einem wenig Essigsäure enthaltenen Bad von 40°C und abschließendes Spülen mit kaltem Wasser, Zentrifugieren und Trocknen fertiggestellt.

Es wird eine Färbung von hoher Farbtiefe erhalten, die einen reinen und klaren blauen Farbton aufweist. Die Färbung zeichnet sich durch hohe Egalität aus.

### Beispiel 10

30 Teile ( = 50 Moläquivalente) des Farbstoffes der Formel (L) 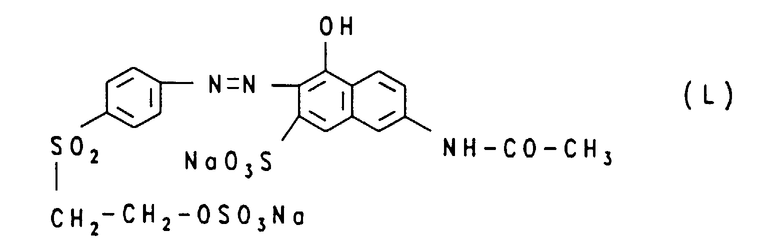 und 1,3 Teile ( = 12,5 Moläquivalente) Diethanol-amin werden in einer Lösung von 7 Teilen Trinatriumphosphat in 1000 Teilen Wasser von 20°C gelöst. Die erhaltene Farbstofflösung besitzt einen pH-Wert von etwa 10. Sie wird auf etwa 90°C erwärmt und während etwa 10 Minuten bei 90°C gehalten, danach mit einer 60 %igen wäßrigen Essigsäure auf einen pH-Wert von 5,5 gestellt und mit Wasser auf ein Volumen von 5000 Vol.-Teilen aufgefüllt.

Von dieser Färbe-Stammlösung werden 20 Vol.-Teile entnommen und mit Wasser, das etwa 0,1 % eines handelsüblichen Netzmittels enthält, auf 100 Vol.-Teile aufgefüllt. In dieses Färbebad werden 10 Teile eines Gewebes aus der im später folgenden Beispiel B-1 beschriebenen Nylonfaser gegeben, der pH-Wert des Färbebades mit Essigsäure auf 5,5 gestellt und das Bad sodann stetig innerhalb von 30 Minuten auf 98°C geheizt. Der Färbeprozeß wird bei dieser Temperatur noch 45 Minuten weitergeführt, das Bad sodann auf 60°C abgekühlt, mit konzentrierter wäßriger Natronlauge auf einen pH-Wert von 10,5 gestellt und bei diesem pH-Wert und der Temperatur von 60°C noch 15 Minuten gehalten.
Anschließend wird das Bad abgelassen und das gefärbte Gewebe in üblicher Weise durch Spülen mit kaltem Wasser, durch Waschen in einem ein nicht-ionogenes Waschmittel enthaltenden wäßrigen Bad bei 80°C, durch erneutes Spülen in einem wenig Essigsäure enthaltenen Bad von 40°C und abschließendes Spülen mit kaltem Wasser, Zentrifugieren und Trocknen fertiggestellt.

Es wird eine Färbung von hoher Farbtiefe erhalten, die einen reinen und klaren goldorangen Farbton aufweist. Die Färbung zeichnet sich durch hohe Egalität aus und ist farbstärker, reiner und brillanter als bei Einsatz des Farbstoffes (L) alleine.

### Beispiel 11

91 Teile eines elektrolytsalzhaltigen (vorwiegend natriumchloridhaltigen) Farbstoffpulvers, enthaltend 33 Teile ( = 33 Moläquivalente) des Farbstoffes der Formel (F), 2,4 Teile ( = 17 Moläquivalente) N-Methyl-taurin und 10 Teile Trinatriumphosphat werden in 1000 Teilen Wasser von 20°C gelöst. Die erhaltene Farbstofflösung besitzt einen pH-Wert von etwa 10. Sie wird auf etwa 90°C erwärmt und während etwa 10 Minuten bei 90°C gehalten, danach mit einer 50 %igen wäßrigen Essigsäure auf einen pH-Wert von 5,5 gestellt und mit Wasser, das etwa 0,1 % eines handelsüblichen Netzmittels enthält, auf ein Volumen von 25000 Vol.-Teilen aufgefüllt.

In dieses Färbebad werden 2500 Teile eines Gewebes aus der im später folgenden Beispiel B-1 beschriebenen Nylonfaser gegeben, der pH-Wert des Färbebades mit Essigsäure auf 5,5 gestellt und das Bad sodann stetig innerhalb von 30 Minuten auf 98°C geheizt. Der Färbeprozeß wird bei dieser Temperatur noch 45 Minuten bei 98°C weitergeführt, das Bad sodann auf 60°C abgekühlt, mit konzentrierter wäßriger Natronlauge auf einen pH-Wert von 10,5 gestellt und bei diesem pH-Wert und der Temperatur von 60°C noch 15 Minuten gehalten. Anschließend wird das Bad abgelassen und das gefärbte Gewebe in üblicher Weise durch Spülen mit kaltem Wasser, durch Waschen in einem ein nicht-ionogenes Waschmittel enthaltenden wäßrigen Bad bei 80°C, durch erneutes Spülen in einem wenig Essigsäure enthaltenen Bad von 40°C und abschließendes Spülen mit kaltem Wasser, Zentrifugieren und Trocknen fertiggestellt.

Es wird wie in Beispiel 5 eine Färbung von hoher Farbtiefe und Egalität erhalten, die einen klaren marineblauen Farbton aufweist.

### Beispiele 12 bis 15

Zur Herstellung einer erfindungsgemäßen Farbstoffmischung und Polyamidfaser-Färbung verfährt man gemäß den Angaben eines der Beispiele 1 bis 3 oder 11, setzt jedoch anstelle des dort eingesetzten Farbstoffes (A) bzw. (B) bzw. (F) einen in den nachfolgenden Tabellenbeispielen angegebenen Farbstoff der Formel (M) bis (P) in der in dem Beispiel 1, 2 oder 3 angegebenen moläquivalenten Menge ein. Man erhält in allen Fällen eine farbstarke Färbung des Polyamidfaser-Gewebes von hoher Egalität und Reinheit der Nuance in dem in dem jeweiligen Tabellenbeispiel angegebenen Farbton.

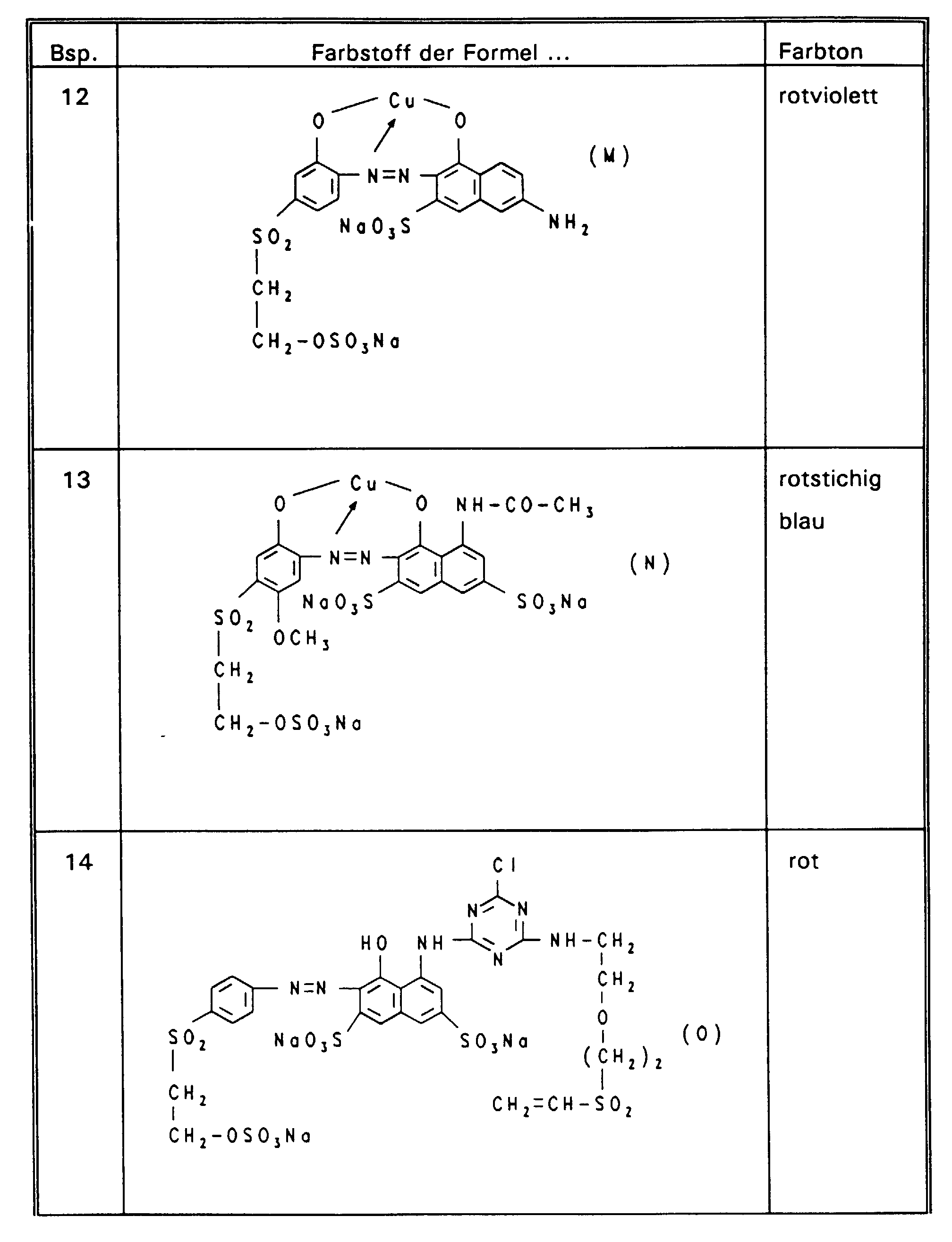

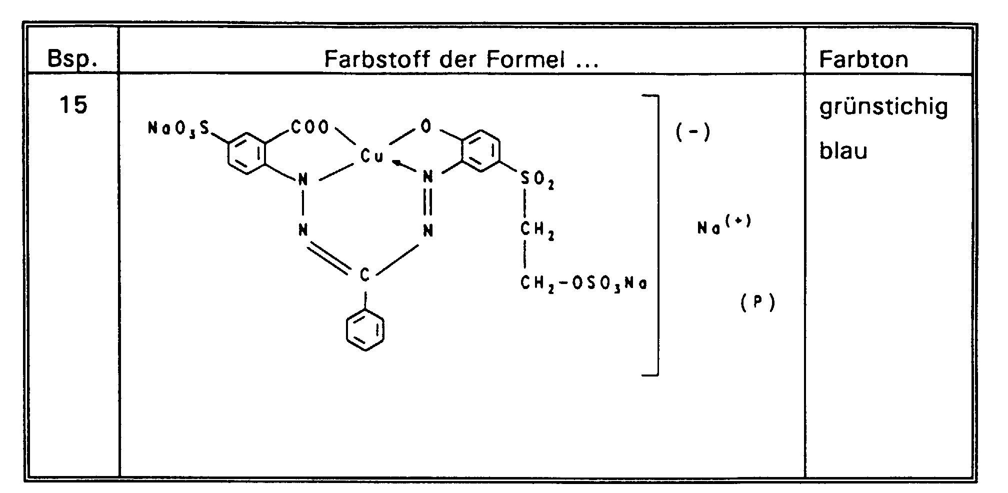

### Vergleichsbeispiel I

Verfährt man gemäß den obigen Tabellenbeispielen unter Einsatz eines der genannten Farbstoffe alleine nach dem Stand der Technik, d.h. ohne Zusatz von N-Methyl-taurin oder einem anderen der angegebenen Aminoverbindungen entsprechend der allgemeinen Formel (3), so erhält man Färbungen in dem genannten Farbton, dessen Brillanz und Klarheit vermißt werden; die Färbungen zeigen zudem gewisse Unegalitäten in den einzelnen Faserbereichen.

### Beispiele 16 bis 27

Zur Herstellung einer erfindungsgemäßen Farbstoffmischung und Polyamidfaser-Färbung verfährt man gemäß der Verfahrensweise des Beispieles 1, 2, 3 oder 11, setzt jedoch anstelle der dort verwendeten Farbstoffe (A) bzw. (B) bzw. (F) einen der nachstehenden formelmäßig angegebenen Farbstoffe und eine Aminoverbindung entsprechend der allgemeinen Formel (3) in dem in dem jeweiligen Tabellenbeispiel angegebenen moläquivalenten Verhältnis ein. Man erhält mit den in situ gebildeten erfindungsgemäßen Farbstoffmischungen mit den Farbstoffen der allgemeinen Formeln (1) und (2) auf dem synthetischen Polyamidfaser-Gewebe farbstarke Färbungen von hoher Egalität und reiner Farbnuance in dem in dem entsprechenden Tabellenbeispiel angegebenen Farbton.

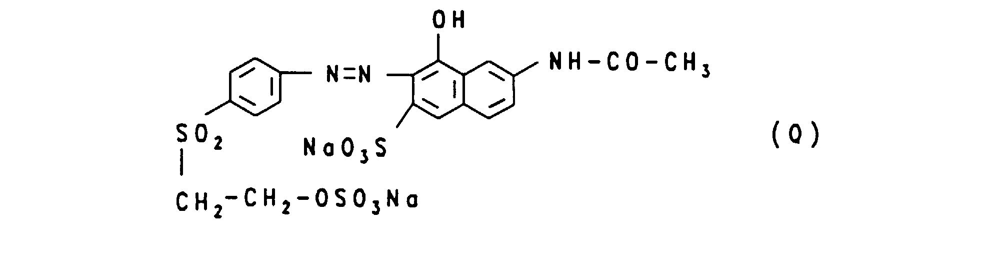

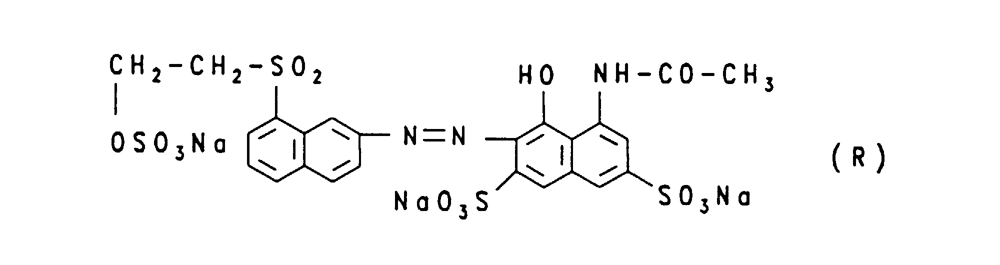

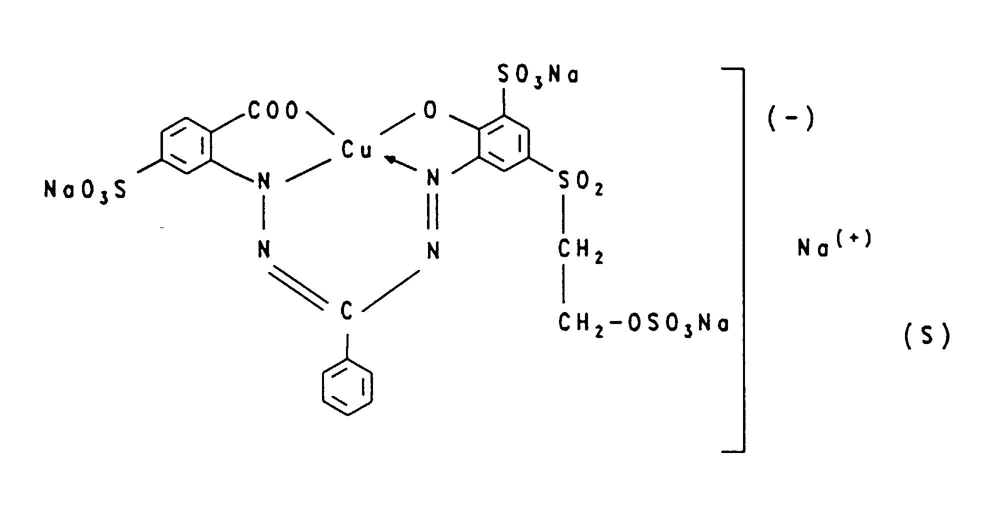

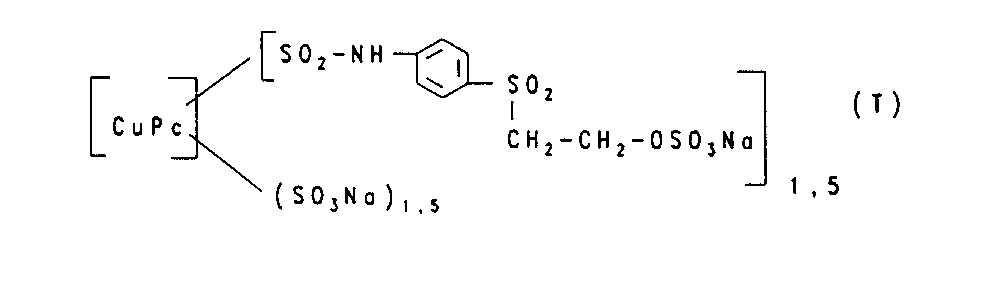

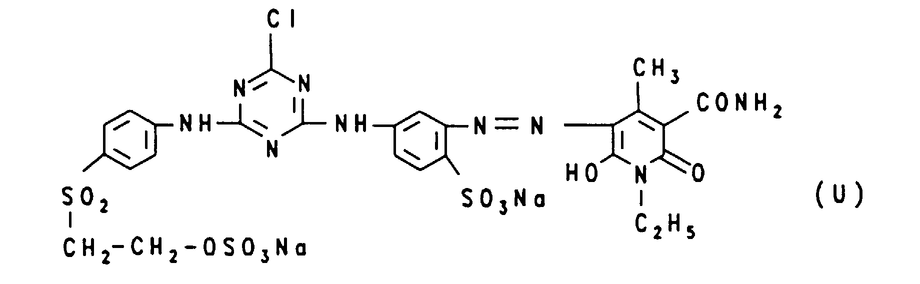

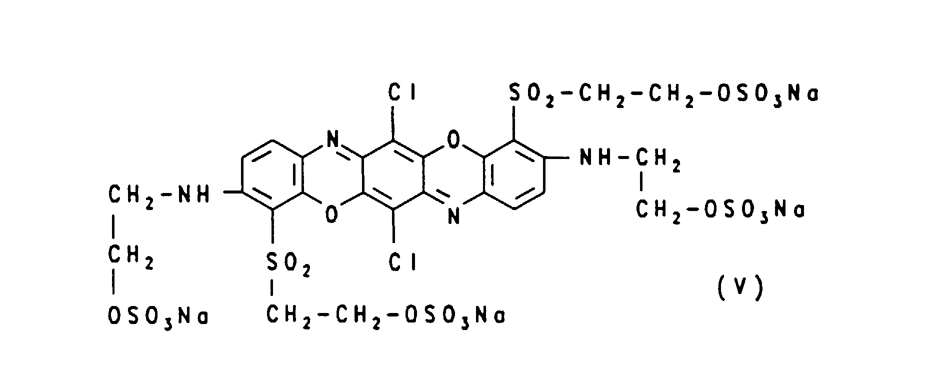

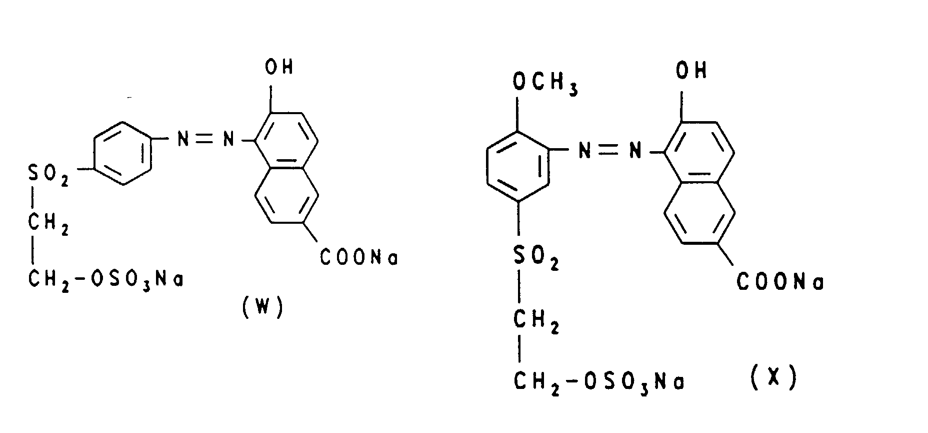

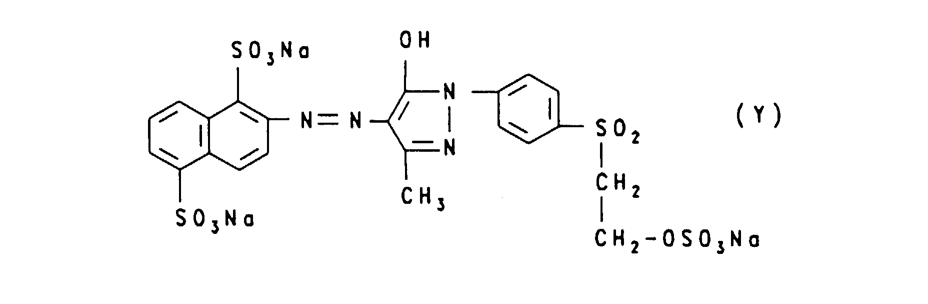

| Bsp. | Farbstoff der Formel | Amin (3) | Moläquivalent Farbstoff:Amin (3) | Farbton |
|---|---|---|---|---|
| 16 | (K) | N-Methyl-taurin | 100:30 % | zitronengelb, brillant |
| 17 | (L) | dito | 100:25 % | goldorange |
| 18 | (Q) | dito | 100:25 % | rotstichig orange, brillant |
| 19 | (R) | dito | 100:20 % | orange, brillant |
| 20 | (S) | dito | 100:30 % | grünstichig blau, brillant |
| 21 | (T) | dito | 100:40 % | türkisblau, brillant |
| 22 | (U) | dito | 100:25 % | zitronengelb |
| 23 | (V) | dito | 100:45 % | königsblau, brillant |
| 24 | (W) | dito | 100:25 % | rotstichig gelb, brillant |
| 25 | (X) | dito | 100:25 % | rotstichig orange, brillant |
| 26 | (J) | dito | 100:40 % | rotstichig blau |
| 27 | (Y) | dito | 100:30 % | grünstichig gelb, brillant |

### Vergleichsbeispiel II

Verfährt man gemäß den obigen Tabellenbeispielen unter Einsatz eines der genannten Farbstoffe alleine nach dem Stand der Technik, d.h. ohne Zusatz von N-Methyl-taurin oder einem anderen der angegebenen Aminoverbindungen entsprechend der allgemeinen Formel (3), so erhält man Färbungen in dem genannten Farbton, dessen Brillanz und Klarheit vermißt werden; die Färbungen zeigen zudem gewisse Unegalitäten in den einzelnen Faserbereichen.

### Beispiel A

### (Herstellung von homopolymerem Polyamid-6,6)

Zur Herstellung von homopolymerem Polyamid-6,6 (Nylon-6,6) gibt man eine 51,5%ige wäßrige Lösung von Polyamid-6,6-Salz (AH-Salz, hergestellt aus Hexamethylendiamin und Adipinsäure) zusammen mit 44 ppm Entschäumer in ein Rührgefäß. Unter Erhitzen von Raumtemperatur auf 155°C unter einem Druck von 2,7 bar wird das Gemisch zu einem Festkörpergehalt von 80 bis 85% eingedampft. Die konzentrierte Aufschlämmung wird unter Inertgas (Stickstoff) in einen Autoklaven überführt und dann erhitzt. Der Eigendruck in dem Autoklaven wird bei 18,2 bar (absolut) gehalten. Bei 230°C und 18,2 bar (absolut) werden 3300 ppm einer 40%igen wäßrigen Dispersion von TiO₂ unter Anwendung eines Stickstoffdrucks von 20 bar eingespritzt. Bei 245°C wird der Druck in dem Autoklaven auf Normaldruck entspannt und dann durch Anlegen eines Vakuums weiter auf 0,65 bar (absolut) reduziert und auf diesem Niveau etwa 30 Minuten lang gehalten. Die Gefäßtemperatur wird über der Schmelztemperatur des nun gebildeten Polymers gehalten und der Gefäßdruck durch Entfernung des Vakuums und Einführung von trockenem Stickstoff auf Normaldruck erhöht. Dem Gefäß wird Stickstoff bei 4 bis 5 bar (absolut) bei etwa 285°C aufgedrückt. Durch den Überdruck fließt die Polymerschmelze in Form von Schnüren aus einer Gefäßöffnung in einen Kühlwasserstrom. Die abgeschreckten Polymerschnüre werden zu Chips granuliert und weiter mit Wasser abgekühlt. Anschließend werden die Polymerchips (etwa 4 mm lang mit einem Durchmesser von 3 mm) vom Wasser abgetrennt und in der Luft bei einer Temperatur unter etwa 60°C getrocknet. Das erhaltene homopolymere Nylon-6,6 hat eine relative Viskosität (RV) von 38 bis 41, gemessen in 90%iger Ameisensäure, was auf eine Ausgewogenheit zwischen den Amin- und Carboxy-Endgruppen hinweist. Die gemessenen Aminendgruppen betragen in der Regel etwa 45 Grammäquivalente pro 1000 kg Polymer (gemessen durch Titration und Vergleich mit bekannten Polymerstandards). Das so hergestellte Polymer enthält 0,24 bis 0,31% Titandioxid (TiO₂) als Mattierungsmittel.

Die so hergestellten Chips aus homopolymerem Polyamid-6,6 werden in einem Schneckenextruder aufgeschmolzen und bei etwa 285°C einer 92 kreisrunde Löcher aufweisenden Spinndüse mit einer Leistung von 0,479 Gramm Polymer pro Loch und Minute zugepumpt. Die erhaltenen Nylonfilamente werden zur Abkühlung quer mit Luft angeblasen, zu einem Multifilamentgarn zusammengeführt, präpariert und bei 4200 Metern pro Minute auf einem vier Meter unterhalb der Spinndüse angeordneten Aufwickelgerät aufgewickelt. Die so hergestellten Garne haben nach Falschdrahttexturierung bei der Filamentzahl von 92 einen Garntiter von 85 denier und einen Einzeltiter von 0,92 denier. Aus den so erhaltenen texturierten Garnen wird eine Maschenware gebildet und mit den erfindungsgemäßen Farbstoffmischungen gefärbt, beispielsweise mit der Färbepräparation des Beispieles 3, mit der eine Färbung erhalten wird, die im Waschechtheitstest nach ISO C06/C2 in Gegenwart von Natriumperborat bei 60°C mit der Farbechtheit 3 zu bewerten ist und im Test auf Wasserechtheit nach ISO E01 eine Echtheit der Note 3 aufweist.

### Beispiel B-1

### (Herstellung von copolymerem Polyamid(Nylon)-6,6/6 mit erhöhtem Aminoendgruppenanteil)

Eine 51,5%ige wäßrige Lösung von AH-Salz (hergestellt aus Hexamethylendiamin und Adipinsäure) wird einer 40%igen wäßrigen Lösung von ε-Caprolactam in einem Verhältnis von 194 000 : 35 000 Teilen zusammen mit 86 Teilen einer 30%igen wäßrigen Hexamethylendiaminlösung und 10 Teilen Entschäumer zugegeben (da das Diamin zum Teil durch Abdampfung verloren geht, ist der Diaminüberschuß durch Vorversuche festzulegen). Nach Überführung in einen Verdampfer wird Wasser so lange verdampft, bis die Temperatur des Verdampfers 155°C bei einem Druck von 2,7 bar (absolut) erreicht; dann wird die Verdampfung eingestellt. Das konzentrierte Gemisch wird, genau wie oben in Beispiel A für homopolymeres Nylon-6,6 beschrieben, verarbeitet. Das so gebildete copolymere Nylon-6,6/6 (85:15%) enthält einen Aminoendgruppenanteil von 67 bis 73 Grammäquivalenten pro 1000 kg Copolyamid (ermittelt durch Titration und Vergleich mit bekannten Polymerstandards), besitzt einen RV-Wert von 52,5 und enthält etwa 0,3% TiO₂ als Mattierungsmittel.

Das so erhaltene Copolyamid wird analog Beispiel A unter Anwendung zweier Spinndüsenanordnungen schmelzversponnen, wobei man nach der Falschdrahttexturierung ein Garn aus 68 Filamenten mit einem Garntiter von 60 denier und einem Einzeltiter von 0,88 und ein Garn aus 46 Filamenten mit einem Garntiter von 78 denier und einem Einzeltiter von 1,69 denier erhält. Aus diesen Garnen wurde eine Maschenware erstellt und mit den erfindungsgemäßen Färbepräparationen gefärbt, beispielsweise mit der Färbepräparation des Beispieles 3, mit der eine Färbung erhalten wird, die im Waschechtheitstest nach ISO C06/C2 in Gegenwart von Natriumperborat bei 60°C die Farbechtheit 4 - 5 und im Test auf Wasserechtheit nach ISO E01 eine Echtheit der Note 4 aufweist.

### Beispiel B-2

### (Herstellung eines Copolyamids aus Nylon-6,6/6 und Isophthalsäure mit erhöhtem Aminoendgruppenanteil)

Eine 51,5%ige wäßrige Lösung von AH-Salz (hergestellt aus einer Mischung von Hexamethylendiamin und Adipinsäure) wird zusammen mit 97 Teilen Adipinsäure und 10 Teilen Entschäumer zu einer 36%igen wäßrigen Lösung eines aus einer Mischung von Hexamethylendiamin und Isophthalsäure (iPa) im Verhältnis von 196 000 : 41 400 Teilen hergestellten Nylon-6,iPa-Salzes gegeben. Nach Überführung in einen Verdampfer wird das Gemisch genau wie bei Beispiel A verarbeitet. Das gebildete Copolyamid aus Nylon-6,6/6,iPa (87:13%) weist einen Aminoendgruppenanteil von 67 bis 73 Grammäquivalenten pro 1000 kg Copolyamid (ermittelt durch Titration und Vergleich mit bekanntem Polymerstandard) und einen RV-Wert von 55,0 auf und enthält 0,3% TiO₂ als Mattierungsmittel.

Das so erhaltene Copolyamid aus Nylon-6,6/6,iPa mit einem erhöhten Aminoendgruppenanteil wird unter den gleichen Bedingungen wie in Beispiel A schmelzversponnen. Das so hergestellte Garn wird zu einem Garntiter von 85 denier und einem Einzeltiter von 0,92 denier bei einer Filamentzahl von 92 texturiert und, zu einer Maschenware verarbeitet und mit den erfindungsgemäßen Färbepräparationen gefärbt, beispielsweise mit der Färbepräparation des Beispieles 3, mit der eine Färbung erhalten wird, die im Waschechtheitstest nach ISO C06/C2 in Gegenwart von Natriumperborat bei 60°C die Farbechtheit 4 - 5 und im Test auf Wasserechtheit nach ISO E01 eine Echtheit der Note 4 aufweist (das hier genannte Polymer kann auch mit einer Kombination aus drei Spinndüsen zu Garnen versponnen werden, die, jeweils nach Falschdrahttexturierung, einen Garntiter von 85 denier und einen Einzeltiter von 0,88 denier bei einer Filamentzahl von 68 und einen Garntiter von 78 denier oder einem Einzeltiter von 1,69 denier bei einer Filamentzahl von 46 sowie einen Garntiter von 78 denier oder einen Einzeltiter von 3,90 denier bei einer Filamentzahl von 20 aufweisen).

### Beispiel B-3

### (Herstellung von homopolymerem Polyamid-6 mit erhöhtem Aminoendgruppenanteil)

Eine 40%ige wäßrige Lösung von ε-Caprolactam wird zusammen mit 400 bis 500 ppm einer 30%igen wäßrigen Hexamethylendiaminlösung und 10 Teilen Entschäumer in einen Verdampfer überführt; dort wird Wasser so lange verdampft, bis die Temperatur des Verdampfers bei einem eingestellten Druck von 2,7 bar (absolut) 155°C erreicht hat, wonach die Verdampfung eingestellt wird. Anschließend wird das konzentrierte Gemisch, wie in Beispiel A beschrieben, verarbeitet. Das gebildete Polyamid-6 weist einen Aminoendgruppenanteil von 67 bis 73 Grammäquivalenten pro 1000 kg Polyamid (ermittelt durch Titration und Vergleich mit bekanntem Polymerstandard) und einen RV-Wert von 52,2 auf und enthält etwa 0,3% TiO₂ als Mattierungsmittel. Die Chips werden analog Beispiel A schmelzversponnen und zur Färbung mit den erfindungsgemäßen Färbepräparationen eingesetzt, beispielsweise mit der Färbepärparation des Beispieles 3, mit der eine Färbung erhalten wird, die im Waschechtheitstest nach ISO C06/C2 in Gegenwart von Natriumperborat bei 60°C die Farbechtheit 4 - 5 und im Test auf Wasserechtheit nach ISO E01 eine Echtheit der Note 4 aufweist.

## Patentansprüche

1. Färbepräparation, enthaltend einen Farbstoff der nachstehend definierten allgemeinen Formel (1) und einen Farbstoff der nachstehend definierten allgemeinen Formel (2) mit einem zum Farbstoff der Formel (1) identischen Farbstoffrest F
F - (SO₂-CH = CH₂)ₙ (1) 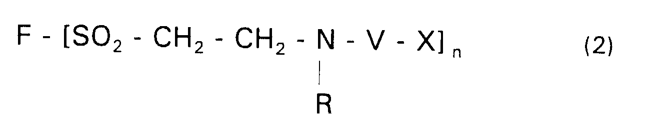
oder eine Mischung von verschiedenen Farbstoffen der allgemeinen Formel (1) und von verschiedenen Farbstoffen der allgemeinen Formel (2) mit zu den jeweiligen Farbstoffen der Formel (1) identischen Farbstoffresten F, wobei der Farbstoff oder die Farbstoffe der allgemeinen Formel (1) und der Farbstoff oder die Farbstoffe der allgemeinen Formel (2) in der Präparation in bezug auf die Gruppen-(SO₂-CH = CH₂)ₙ und -[SO₂-CH₂-CH₂-N(R)-V-X]ₙ zueinander im moläquivalenten Verhältnis von 90:10 % bis 60:40 % vorliegen und in den Formeln (1) und (2) bedeuten:
F ist der Rest eines 1 oder 2 wasserlöslich-machende Gruppen, wie Sulfato-, Sulfo- und/oder Carboxygruppen, besitzenden Mono-, Dis- oder Polyazofarbstoffes oder Schwermetallkomplex-Mono-, -Dis- oder -Trisazofarbstoffes oder Anthrachinon-, Azomethin-, Phenazin-, Stilben-, Triphenylmethan-, Xanthen-, Thioxanthen-, Nitroaryl-, Naphthochinon-, Perylentetracarbimid-, Formazan-, Kupferformazan-, Phthalocyanin-, Kupferphthalocyanin-, Nickelphthalocyanin- oder Kobaltphthalocyanin-Farbstoffes oder Triphendioxazin-Farbstoffes;
n ist die Zahl 1 oder 2;
R ist Wasserstoff oder Alkyl von 1 bis 6 C-Atomen, das durch 1 oder 2 Heterogruppen unterbrochen und durch einen Substituenten aus der Gruppe Sulfo, Carboxy, Hydroxy, Sulfato, Phosphato und Alkanoylamino von 2 bis 5 C-Atomen substituiert sein kann;
V ist eine kovalente Bindung oder Alkylen von 1 bis 4 C-Atomen oder eine Gruppe der Formel -CO-NH-CH₂-CH₂- ;
X ist eine wasserlöslich-machende Gruppe.

2. Farbstoffpräparation, enthaltend einen oder mehrere Farbstoffe der nachstehend definierten allgemeinen Formel (1A) und/oder einen oder mehrere der Farbstoffe der Formel (1) und eine oder mehrere Verbindungen der nachstehend definierten allgemeinen Formel (3)
F - (SO₂-CH₂-CH₂-OSO₃M)ₙ (1A)
F - (SO₂-CH = CH₂)ₙ (1) 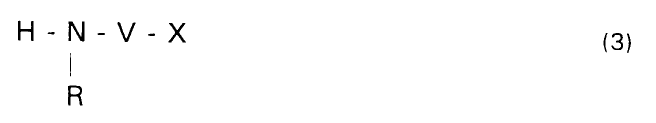
wobei der oder die Farbstoffe der allgemeinen Formeln (1A) und (1) in bezug auf die β-Sulfatoethylsulfonyl- und Vinylsulfonyl-Gruppen zu der oder den Verbindungen der allgemeinen Formel (3) im moläquivalenten Verhältnis von 100:10 % bis 100:40 % vorliegen und in den Formeln (1A), (1) und (3) bedeuten:
F ist der Rest eines 1 oder 2 wasserlöslich-machende Gruppen, wie Sulfato-, Sulfo- und/oder Carboxygruppen, besitzenden, Mono-, Dis- oder Polyazofarbstoffes, wie Trisazofarbstoffes, oder Schwermetallkomplex-Mono-, -Dis- oder -Trisazofarbstoffes oder Anthrachinon-, Azomethin-, Phenazin-, Stilben-, Triphenylmethan-, Xanthen-, Thioxanthen-, Nitroaryl-, Naphthochinon-, Perylentetracarbimid-, Formazan-, Kupferformazan-, Phthalocyanin-, Kupferphthalocyanin-, Nickelphthalocyanin- oder Kobaltphthalocyanin-Farbstoffes oder Triphendioxazin-Farbstoffes;
n ist die Zahl 1 oder 2;
M ist Wasserstoff oder ein Alkalimetall;
R ist Wasserstoff oder Alkyl von 1 bis 6 C-Atomen, das durch 1 oder 2 Heterogruppen unterbrochen und durch einen Substituenten aus der Gruppe Sulfo, Carboxy, Hydroxy, Sulfato, Phosphato und Alkanoylamino von 2 bis 5 C-Atomen substituiert sein kann:
V ist eine kovalente Bindung oder Alkylen von 1 bis 4 C-Atomen oder eine Gruppe der Formel -CO-NH-CH₂-CH₂- ;
X ist eine wasserlöslich-machende Gruppe.

3. Färbepräparation nach Anspruch 1, gekennzeichnet durch einen Gehalt an dem oder den Farbstoffen (1) und dem oder den Farbstoffen (2) im moläquivalenten Verhältnis von 80:20 % bis 65:35 %, bezogen auf die Gruppen -(SO₂-CH=CH₂)ₙ und -[SO₂-CH₂-CH₂-N(R)-V-X]ₙ.

4. Färbepräparation nach Anspruch 2, gekennzeichnet durch einen Gehalt des oder der Farbstoffe der allgemeinen Formeln (1A) und/oder (1) und der oder den Verbindungen der allgemeinen Formel (3) im moläquivalenten Verhältnis von 100:20 % bis 100:35 %, bezogen auf die β-Sulfatoethylsulfonyl-/Vinylsulfonyl-Gruppen -Gruppen und die Gruppe(n) der Formel (3a) 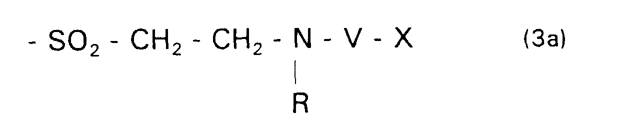 mit R, V und X der in Anspruch 2 angegebenen Bedeutung.

5. Färbepräparation nach mindestens einem der Ansprüche 1 bis 4, dadurch gekennzeichnet, daß R Wasserstoff, Methyl, Ethyl oder β-Hydroxyethyl bedeutet.

6. Färbepräparation nach mindestens einem der Ansprüche 1 bis 4, dadurch gekennzeichnet, daß R Methyl oder Ethyl bedeutet.

## Claims

1. A dyeing preparation comprising a dye of the formula (1) defined below and a dye of the formula (2) defined below with a dye radical F which is identical to the dye of the formula (1)
F - (SO₂-CH = CH₂)ₙ (1) 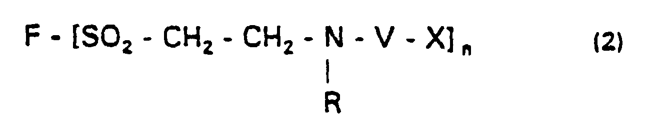
or a mixture of different dyes of the formula (1) and of different dyes of the formula (2) with dye radicals F which are identical to the respective dyes of the formula (1), the dye or dyes of the formula (1) and the dye or dyes of the formula (2) being present in the preparation in a molar-equivalent ratio to one another, in terms of the groups -(SO₂-CH=CH₂)ₙ and -[SO₂-CH₂-CH₂-N(R)-V-X]ₙ, of from 90:10 % to 60:40 %, and in the formulae (1) and (2):
F is the radical of a mono-, dis- or polyazo dye or heavy metal complex mono-, dis- or trisazo dye or anthraquinone, azomethine, phenazine, stilbene, triphenylmethane, xanthene, thioxanthene, nitroaryl, naphthoquinone, perylenetetracarbimide, formazan, copper formazan, phthalocyanine, copper phthalocyanine, nickel phthalocyanine or cobalt phthalocyanine dye or triphendioxazine dye, which possesses 1 or 2 groups which impart water-solubility, such as sulfato, sulfo and/or carboxy groups;
n is the number 1 or 2;
R is hydrogen or alkyl of 1 to 6 carbon atoms which can be interrupted by 1 or 2 heterogroups and can be substituted by a substituent from the group consisting of sulfo, carboxy, hydroxy, sulfato, phosphato and alkanoylamino of 2 to 5 carbon atoms;
V is a covalent bond or alkylene of 1 to 4 carbon atoms, or a group of the formula -CO-NH-CH₂-CH₂-;
X is a group which imparts water-solubility.

2. A dye preparation comprising one or more dyes of the formula (1A) defined below and/or one or more of the dyes of the formula (1) and one or more compounds of the formula (3) defined below
F - (SO₂-CH₂-CH₂-OSO₃M)ₙ (1A)
F - (SO₂-CH = CH₂)ₙ (1) 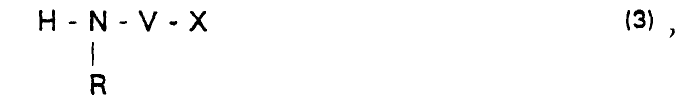
the dye or dyes of the formulae (1A) and (1) and, in terms of the β-sulfatoethylsulfonyl and vinylsulfonyl groups, the compound or compounds of the formula (3) being present in a molar-equivalent ratio to one another of from 100:10 % to 100:40 %, and in the formulae (1A), (1) and (3):
F is the radical of a mono-, dis- or polyazo dye, such as a trisazo dye, or heavy metal complex mono-, dis- or trisazo dye or anthraquinone, azomethine, phenazine, stilbene, triphenylmethane, xanthene, thioxanthene, nitroaryl, naphthoquinone, perylenetetracarbimide, formazan, copper formazan, phthalocyanine, copper phthalocyanine, nickel phthalocyanine or cobalt phthalocyanine dye or triphendioxazine dye, which possesses 1 or 2 groups which impart water-solubility, such as sulfato, sulfo and/or carboxy groups;
n is the number 1 or 2;
M is hydrogen or an alkali metal;
R is hydrogen or alkyl of 1 to 6 carbon atoms which can be interrupted by 1 or 2 heterogroups and can be substituted by a substituent from the group consisting of sulfo, carboxy, hydroxy, sulfato, phosphato and alkanovlamino of 2 to 5 carbon atoms;
V is a covalent bond or alkylene of 1 to 4 carbon atoms, or a group of the formula -CO-NH-CH₂-CH₂-;
X is a group which imparts water-solubility.

3. A dyeing preparation as claimed in claim 1, wherein the dye or dyes (1) and the dye or dyes (2) are present in a molar-equivalent ratio of from 80:20 % to 65:35 %, in terms of the groups -(SO₂-CH=CH₂)ₙ and -[SO₂-CH₂-CH₂-N(R)-V-X]ₙ.

4. A dyeing preparation as claimed in claim 2, wherein the dye or dyes of the formulae (1A) and/or (1) and the compound or compounds of the formula (3) are present in a molar-equivalent ratio of from 100:20 % to 100:35 %, in terms of the β-sulfatoethylsulfonyl/vinylsulfonyl groups and the group(s) of the formula (3a) 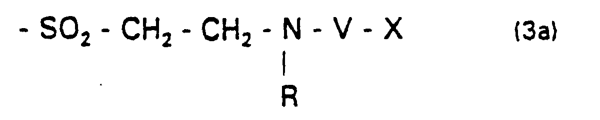 where R, V and X are as defined in claim 2.

5. A dyeing preparation as claimed in at least one of claims 1 to 4, wherein R is hydrogen, methyl, ethyl or β-hydroxyethyl.

6. A dyeing preparation as claimed in at least one of claims 1 to 4, wherein R is methyl or ethyl.

## Revendications

1. Préparation de teinture, contenant un colorant de formule générale (1) définie ci-dessous et un colorant de formule générale (2) définie ci-dessous, avec un radical de colorant F identique au colorant de formule (1)
F - (SO₂-CH = CH₂)ₙ (1) 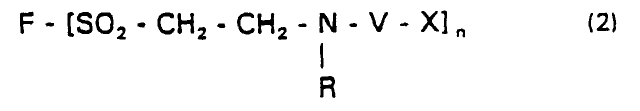
ou un mélange de différents colorants de formule générale (1) et de différents colorants de formule générale (2), avec des radicaux de colorant F identiques aux colorants de formule (1) respectifs, dans laquelle le colorant ou les colorants de formule générale (1) et le colorant ou les colorants de formule générale (2) se trouvent l'un par rapport à l'autre dans la préparation, quant aux groupements -(SO₂-CH=CH₂)ₙ et -[SO₂-CH₂-CH₂-N(R)-V-X]ₙ, dans le rapport d'équivalent molaire de 90:10% à 60:40% et désignent, dans les formules (1) et (2) :
F est le radical d'un ou deux groupements qui rendent solubles dans l'eau, comme des groupements sulfato, sulfo et/ou carboxy, possédant un colorant mono, di ou polyazoïque ou un colorant au complexe de métal lourd mono, di ou triazoïque, ou un colorant d'anthraquinone, d'azométhine, de phénazine, de stilbène, de triphénylméthane, de xanthène, de thioxanthène, de nitroaryle, de naphtoquinone, de pérylènetétracarbimide, de formazan, de formazan de cuivre, de phtalocyanine, de phtalocyanine de cuivre, de phtalocyanine de nickel ou de phtalocyanine de cobalt, ou un colorant de triphénodioxazine;
n est le nombre 1 ou 2;
R est un hydrogène ou un alkyle de 1 à 6 atomes de carbone, qui peut être interrompu par 1 ou 2 hétérogroupements et être substitué par un substituant du groupement de sulfo, de carboxy, d'hydroxy, de sulfato, de phosphato et d'alcanoylamino de 2 à 5 atomes de carbone;
V est une liaison covalente ou un alkylène de 1 à 4 atomes de carbone ou un groupement de formule -CO-NH-CH₂-CH₂- ;
X est un groupement qui rend soluble dans l'eau.

2. Préparation de teinture, contenant un ou plusieurs colorants de formule générale (lA) définie ci-dessous et/ou un ou plusieurs colorants de formule (1) et un ou plusieurs composés de formule générale (3) définie ci-dessous
F - (SO₂-CH₂-CH₂-OSO₃M)ₙ (1A)
F - (SO₂-CH = CH₂)ₙ (1) 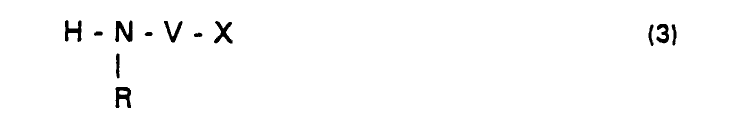
dans laquelle le ou les colorants de formules générales (1A) et (1) se trouvent, quant aux groupements β-sulfatoéthylsulfonyle et vinylsulfonyle à du ou des composés de formule générale (3), dans le rapport d'équivalents molaires de 100:10% à 100:40%, et désignent, dans les formules (1A), (1) et (3) :
F est le radical d'un ou deux groupements qui rendent solubles dans l'eau, comme des groupements sulfato, sulfo et/ou carboxy, possédant un colorant mono, di ou polyazoïque, comme un colorant triazoïque, ou un colorant au complexe de métal lourd mono, di ou triazoïque, ou un colorant d'anthraquinone, d'azométhine, de phénazine, de stilbène, de triphénylméthane, de xanthène, de thioxanthène, de nitroaryle, de naphtoquinone, de pérylènetétracarbimide, de formazan, de formazan de cuivre, de phtalocyanine, de phtalocyanine de cuivre, de phtalocyanine de nickel ou de phtalocyanine de cobalt, ou un colorant de triphénodioxazine;
n est le nombre 1 ou 2;
M est un hydrogène ou un métal alcalin;
R est un hydrogène ou un alkyle de 1 à 6 atomes de carbone, qui peut être interrompu par 1 ou 2 hétérogroupements et être substitué par un substituant du groupement de sulfo, de carboxy, d'hydroxy, de sulfato, de phosphato et d'alcanoylamino de 2 à 5 atomes de carbone;
V est une liaison covalente ou un alkylène de 1 à 4 atomes de carbone ou un groupement de formule -CO-NH-CH₂-CH₂-;
X est un groupement qui rend soluble dans l'eau.

3. Préparation de teinture suivant la revendication 1, caractérisée par une teneur en le ou les colorants (1) et en le ou les colorants (2) dans le rapport d'équivalent molaire de 80:20% à 65:35%, sur base des groupements -(SO₂-CH=CH₂)ₙ et -[SO₂-CH₂-CH₂-N(R)-V-X]ₙ.

4. Préparation de teinture suivant la revendication 2, caractérisée par une teneur en le ou les colorants de formules générales (1A) et/ou (1) et en le ou les composés de formule générale (3) dans le rapport d'équivalent molaire de 100:20% à 100:35%, sur base des groupements β-sulfatoéthyl-sulfonyle/vinylsulfonyle et du ou des groupements de formule (3a) 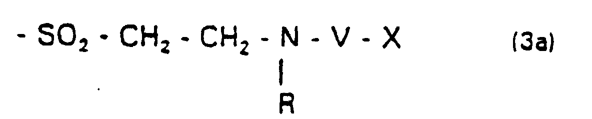 R, V et X ayant la signification donnée à la revendication 2.

5. Préparation de teinture suivant l'une au moins des revendications 1 à 4, caractérisée en ce que R signifie un hydrogène, un méthyle, un éthyle ou un β-hydroxyéthyle.

6. Préparation de teinture suivant l'une au moins des revendications 1 à 4, caractérisée en ce que R signifie un méthyle ou un éthyle.
